(19) Europäisches Patentamt / European Patent Office / Office européen des brevets

(11) **EP 4 671 654 B1**

(12) **EUROPEAN PATENT SPECIFICATION**

(45) Date of publication and mention
of the grant of the patent:
**29.07.2026   Bulletin 2026/31**

(21) Application number: **24223852.5**

(22) Date of filing: **31.12.2024**

(51) International Patent Classification (IPC):
**F26B 25/12** *(2006.01)*

(52) Cooperative Patent Classification (CPC):
**F26B 25/12**

(54) **DRYER**

TROCKNER

SÉCHOIR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: 28.06.2024   **CN 202421520268 U**
16.08.2024   **CN 202411127260**
16.08.2024   **CN 202421998345 U**
16.08.2024   **CN 202421998186 U**

(43) Date of publication of application:
**31.12.2025   Bulletin 2026/01**

(73) Proprietor: **Guangdong Kangye Electric
Appliance Co., Ltd.
Foshan City, Guangdong 528322 (CN)**

(72) Inventor: **HUANG, Fugen
Foshan City, Guangdong 528322 (CN)**

(74) Representative: **Jell, Friedrich
Bismarckstrasse 9
4020 Linz (AT)**

(56) References cited:
**CA-A- 1 163 790        CN-A- 102 944 105
CN-U- 208 804 989        CN-Y- 2 835 921**

# EP 4 671 654 B1

**Description**

## CROSS-REFERENCE TO RELATED APPLICATIONS

The present invention claims the priority to the Chinese patent application No. 202421520268.3 filed on June 28, 2024 and entitled "DRYER".

The present invention claims the priority to the Chinese patent application No. 202411127260.5 filed on August 16, 2024 and entitled "DRYER".

The present invention claims the priority to the Chinese patent application No. 202421998345.6 filed on August 16, 2024 and entitled "CABINET DOOR BEARING DEVICE AND DRYER".

The present invention claims the priority to the Chinese patent application No. 202421998186.X filed on August 16, 2024 and entitled "VENTILATION STRUCTURE OF DRYER AND DRYER".

## TECHNICAL FIELD

The present invention relates to the technical field of drying equipment, and particularly to a dryer.

## BACKGROUND ART

Driers can process a lot of food by air-drying, can make favorite snacks very simply, and thus are gradually popular with consumers. At present, in order to meet more application requirements of users, dryers are gradually developed from a single cavity to multi-cavity application; however, it is found in the multi-cavity application that different cavities have influenced temperature and tainted odor, thus reducing users' using experience.

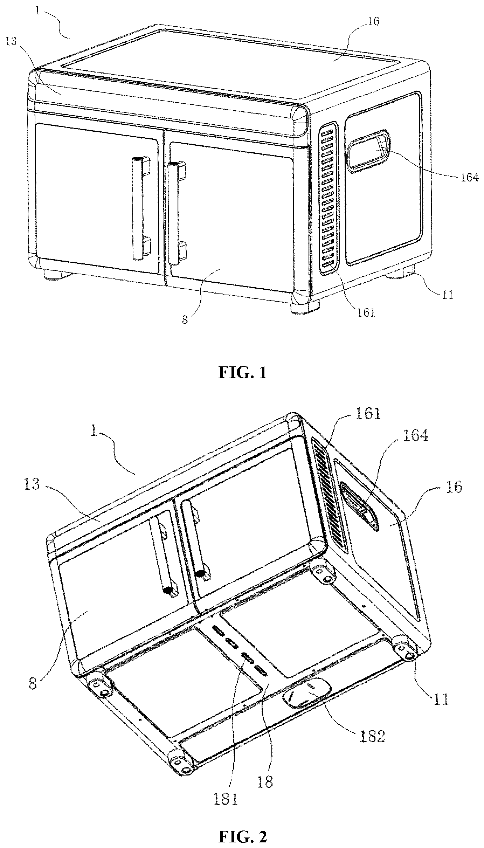

From CA1163790A, a dryer is known, having an upper dryer chamber, showing upright side panels and horizontal roof panels, and a lower chamber, showing upright door panels and horizontal floor panels. According to CA1163790A, in Fig. 1 a transverse I-beam should be provided between the upper dryer chamber and the lower chamber. In CA1163790A, most of the panels are normally constructed of sheet metal.

In addition, CA1163790A mentions that door panels will be deemed to include their frames - and that a sealing of the openable door panels may be completed by mounting a continuous sealing strip around the entire frame of the door panel against which the door panel will press when closed.

## SUMMARY

Embodiments of the present invention aim at providing a dryer, which can facilitate improving a blocking effect between different cavities in the dryer, and avoid influences of influenced temperature and tainted odor between different cavities, thus improving user' using experience.

Furthermore, the present invention aims at providing a dryer, which facilitates prolonging the service lifetime of the joint between the cabinet door and the case and avoiding a phenomenon of premature corner lowering or drooping of the cabinet door in use.

The present invention adopts following technical solutions for solving the above technical problems.

Solutions of the present invention provide a dryer according to claim 1.

In some embodiments, two side plates are provided, and the side wall members have a cross section in an "L" shape; or

three side plates are provided, and the side wall members have a cross section in a "U" shape; or
four side plates are provided, and the side wall members have a cross section in a rectangular shape.

In some embodiments, the side wall member is molded as an integrated structure; or
two adjacent side plates on the side wall member are spliced, and the two adjacent side plates are sealed at a joint therebetween.

In some embodiments, the side plates include a first side plate and a second side plate, where the first side plate and the second side plate are respectively provided at two sides of the inner chamber; and

the first side plate and the second side plate are provided with a plurality of convex ribs protruding towards the inner chambers, the plurality of convex ribs are provided at intervals in a vertical direction, and the convex ribs on the first side plate and the second side plate are corresponding to each other.

In some embodiments, the side plates include an inner side plate and an outer side plate, and a hollow interlayer is provided between the inner side plate and the outer side plate.

In some embodiments, the inner side plate and the outer side plate have different thermal conductivity coefficients.

In some embodiments, the barrier structure is an air layer; and

the case includes an outer shell, where the outer shell is provided with a plurality of vent holes, a flow space is formed between the outer shell and the inner tanks, and the flow space communicates the air layer with the vent holes.

In some embodiments, the vent holes are provided in a strip shape, and the plurality of vent holes are provided side by side on a side surface of the outer shell in a vertical direction.

In some embodiments, the case includes an upper cover plate, the side wall members have a cross section in a "U" shape, and U-shaped openings of the two side wall members are directed to the upper cover plate and are hermetically connected to the upper cover plate; and

the upper cover plate is provided with a first through hole communicating with the air layer.

In some embodiments, a sealing rubber strip is provided between the side wall members and the upper cover plate; and

the sealing rubber strip has a width corresponding to a thickness of the side plates; or the sealing rubber strip has a width corresponding to a width of the barrier structure, the sealing rubber strip is provided with a second through hole, and the second through hole is corresponding to the first through hole.

In some embodiments, the case includes a rear cover plate, a rear end of the side wall members is hermetically connected to the rear cover plate; and

the rear cover plate is provided with a third through hole communicating with the air layer.

In some embodiments, the case is provided therein with a discharge-promoting fan, where an air supply end of the discharge-promoting fan is provided towards the air layer; and

airflow enters the air layer under the action of the discharge-promoting fan, passes through the flow space and then is discharged from the vent holes.

In some embodiments, at least one barrier net is provided between the side wall members and the rear cover plate; and

the side wall members and the barrier net are hermetically connected at a joint therebetween, and the rear cover plate and the barrier net are hermetically connected at a joint therebetween.

In some embodiments, the rear cover plate is provided thereon with air guide structures in a horn shape corresponding to the air supply assemblies.

In some embodiments, a mesh density of the barrier net is uniformly arranged; or

a mesh density of the barrier net is decreased from a central area of the inner chambers to an outer edge.

In some embodiments, the air supply assemblies each include an air blower and an electric heating member, where the air blower is configured to transfer heat dissipated by the electric heating member into the inner chamber.

In some embodiments, the inner chambers are each provided with a temperature sensor configured to detect an operating temperature, and the operating temperature of the inner chambers is set to be less than 100 °C.

In some embodiments, a wind shielding plate is provided between two adjacent air supply assemblies.

In some embodiments, rotational directions of the air blowers of the two adjacent air supply assemblies are provided to be opposite.

In some embodiments, the air supply assemblies are provided with at least two air blowers.

In some embodiments, the case is provided with first air control devices, where the first air control devices are in one-to-one correspondence with the air supply assemblies, and the first air control devices each include an oscillation frame and a first driver configured to drive the oscillation frame to oscillate; and

the air blowers are provided on the oscillation frames.

In some embodiments, the case is provided with second air control devices, where the second air control devices are in one-to-one correspondence with the inner chambers, and the second air control devices each include a mounting frame, a plurality of air guide plates movably provided on the mounting frame, and a second driver configured to drive the air guide plates to oscillate; and

the air guide plates are provided between the air blower and the inner chamber.

In some embodiments, the barrier structure is a vacuum space.

In some embodiments, the barrier structure is filled therein with a heat insulation filler.

In some embodiments, the case is provided with a lifting groove on a side surface.

In some embodiments, the case is provided with a plug receiving groove, and the plug receiving groove is provided therein with a socket structure for plugging a plug.

In some embodiments, the case is provided with a dustproof cover on a rear side.

According to the present invention, the case is provided with cabinet doors, and the number of the cabinet doors is in correspondence with the number of the inner chambers; or

the at least two inner chambers share one cabinet door.

In some embodiments, the inner chambers and the cabinet doors are provided with vent gaps therebetween, and air delivered by the air supply assemblies to the inner chambers is discharged to the outside from the vent gaps; and

the vent gaps of the two adjacent inner chambers are provided to be sealed and blocked from each other.

In some embodiments, a ratio of a flow area of the vent gap to a volume of the inner chamber is: $1 \text{ mm}^2{:}10400 \text{ mm}^3$ - $1 \text{ mm}^2{:}5200 \text{ mm}^3$.

According to the present invention, the case is provided with a bearing portion, the cabinet doors are provided with an abutment portion, and the abutment portion can move to the bearing portion with closing of the cabinet door, so as to support the cabinet door through the bearing portion; and

the bearing portion is provided with a first fitting portion, the cabinet door is provided with a second fitting portion, and the second fitting portion can form a locking connection with the first fitting portion along with the closing of the cabinet door.

In some embodiments, one end of the bearing portion is connected to the case, and the other end is provided to protrude towards a front side surface of the case; and

the bearing portion is detachably connected to the case; or the bearing portion is integrated with the case.

In some embodiments, the first fitting portion is a locking slot provided on the bearing portion, the second fitting portion is a locking pin provided on the cabinet door, and the locking pin can be moved to extend into the locking slot; or the first fitting portion is a locking pin provided on the bearing portion, the second fitting portion is a locking slot provided on the cabinet door, and the locking pin can be moved to extend into the locking slot.

In some embodiments, the locking pin is provided with an elastic element, and the elastic element is connected to the locking pin, and is configured to provide a pre-tightening force to the locking pin.

In some embodiments, the tail end of the locking pin is provided in a spherical shape, and an inner wall surface of the locking slot is provided as a cambered surface; and/or

a front end of the bearing portion is provided with an inclined guide surface.

Compared with the prior art, the solutions of the present invention at least have the following beneficial effects.

In the solutions of the present invention, by forming the barrier structure between the side wall members of two inner tanks, the inner chambers of the two inner tanks can be blocked by the barrier structure, so that heat transmission between the two adjacent inner chambers can be reduced, the influence of influenced temperature and tainted odor between different inner chambers can be reduced and even avoided, and independence of processing food between different inner chambers can be improved, so that users can have better using experience.

BRIEF DESCRIPTION OF DRAWINGS

In order to more clearly illustrate technical solutions of embodiments of the present invention, drawings that need to be used in the embodiments of the present invention will be briefly introduced below. It should be understood that the drawings only show some embodiments of the present invention, and thus should not be regarded as limitation to the scope. Those ordinary skilled in the art could also obtain other related drawings based on these drawings without using inventive efforts.

FIG. 1 is a structural schematic view of a dryer in an example of the present invention.

FIG. 2 is a structural schematic view of a bottom portion of a dryer in an example of the present invention.

FIG. 3 is a schematic diagram of forming a barrier structure in an example of the present invention.

FIG. 4 is a schematic diagram of forming a barrier structure in an example of the present invention.

FIG. 5 is a schematic diagram of forming a barrier structure in an example of the present invention.

FIG. 6 is a structural schematic diagram of a side wall member in an example of the present invention.

FIG. 7 is a schematic diagram of forming a barrier structure in an example of the present invention.

FIG. 8 is a schematic diagram of forming a barrier structure in an example of the present invention.

FIG. 9 is a structural schematic diagram of a side wall member in an example of the present invention.

FIG. 10 is a schematic diagram of forming a barrier structure in another example of the present invention.

FIG. 11 is a schematic diagram of forming a barrier structure in another example of the present invention.

FIG. 12 is a schematic diagram of forming a barrier structure in another example of the present invention.

FIG. 13 is a sectional structural schematic diagram of a side plate in an example of the present invention;

FIG. 14 is a schematic view of an interior structure of a dryer in an example of the present invention.

FIG. 15 is a structural schematic view of an inner tank assembly in an example of the present invention.

FIG. 16 is a structural schematic view of an inner tank assembly in an example of the present invention.

FIG. 17 is a schematic view of application of side wall members in an example of the present invention.

FIG. 18 is a structural schematic view of a side wall member in an example of the present invention.

FIG. 19 is a structural schematic view of a first air control device in an example of the present invention.

FIG. 20 is a schematic view of installation of air blowers on an oscillation frame in another example of the present invention.

FIG. 21 is a schematic view of installation of air blowers on an oscillation frame in another example of the present invention.

FIG. 22 is a schematic view of application of a second air control device in an example of the present invention.

FIG. 23 is a schematic view of driving air guide plates in an example of the present invention.

FIG 24 is a schematic view of installation of dustproof covers in an example of the present invention.

FIG. 25 is a structural schematic view of a dryer in another example of the present invention.

FIG. 26 is a structural schematic view of an inner tank assembly in another example of the present invention.

FIG. 27 is a structural schematic view of an inner tank assembly in another example of the present invention.

FIG. 28 is an application schematic view of a barrier net in an example of the present invention.

FIG. 29 is a structural schematic view of a barrier net in an example of the present invention.

FIG. 30 is a structural schematic view of a barrier net in an example of the present invention.

FIG. 31 is a structural schematic view of a barrier net in an example of the present invention.

FIG. 32 is a front structural schematic view of a dryer in an example of the present invention.

FIG. 33 is a structural comparison schematic view of a cabinet door when being closed and a case in an example of the present invention.

FIG. 34 is a structural schematic view of a dryer in an example of the present invention.

FIG. 35 is a schematic view of connection between a cabinet door when being closed and a bearing portion in an example of the present invention.

FIG. 36 is an enlarged structural schematic view of a locking pin in an example of the present invention.

FIG. 37 is a structural schematic view of a bearing portion in an example of the present invention.

Description of reference signs:

1-case, 11-foot pad, 12-power cord, 13-control panel, 14-tray, 15-bracket, 16-outer shell, 161-vent hole, 162-flow space, 163-discharge-promoting fan, 164-lifting groove, 17-upper cover plate, 171-first through hole, 18-bottom side plate, 181-fourth through hole, 182-plug receiving groove, 19-rear cover plate, 191-third through hole, 192-air guide structure, 101-air hole, 102-bearing portion, 1021-locking slot, 1022-inclined guide surface;

2-inner tank, 20-inner chamber, 201-bottom plate, 21-side wall member, 211-side plate, 2111-first side plate, 2112-second side plate, 2113-inner side plate, 2114-outer side plate, 2115-hollow interlayer, 2116-bent edge, 2117-mounting hole, 22-auxiliary plate, 23-connecting plate, 24-convex rib, 241-groove, 25-inner tank assembly, 26-sealing rubber strip, 261-second through hole, 27-barrier net, 271-first barrier net, 272-second barrier net, 28-temperature sensor;

3-barrier structure, 31-air layer, 32-vacuum space, 33-heat insulation filler, 34-heat insulation coating layer;

4-air supply assembly, 41-air blower, 42-electric heating member, 43-wind shielding plate;

5-first air control device, 51-oscillation frame, 511-shaft contact, 52-first driver, 53-oscillation arm;

6-second air control device, 61-mounting frame, 62-air guide plate, 621-first gear, 622-second gear, 63-second driver;

7-dustproof cover, 71-cover body, 72-hollow area;

8-cabinet door, 81-vent gap, 82-sealing separator, 83-locking pin, 831-elastic element.

## DETAILED DESCRIPTION OF EMBODIMENTS

Below, embodiments of the present invention will be further described in detail in conjunction with drawings and examples. The following detailed description of the embodiments are used to exemplarily illustrate the principle of the present invention, but cannot be used to limit the scope of the present invention, that is, the present invention is not limited to the described embodiments.

Unless otherwise defined, all of the technical and scientific terms used in the present invention have the same meanings as those commonly understood by those skilled in the art to which the present invention belongs; the terms used herein are merely for the purpose of describing specific embodiments, but are not intended to limit the present invention; the terms "comprise (include)" and "have" and any variations thereof in the description, the claims and the above BRIEF DESCRIPTION OF DRAWINGS of the present invention are intended to cover non-exclusive inclusions.

In the description of the present invention, it should be noted that, unless otherwise stated, "a plurality (multiple)" means two or more; orientation or positional relationships indicated by the terms "upper", "lower", "left", "right", "inner", "outer" and the like are merely for the purpose of describing the present invention and simplifying the description, and are not intended to indicate or imply that the device or element referred to must have a specific orientation, is constructed and operated in a specific orientation, and thus cannot be understood as limitation to the present invention. Besides, the terms "first", "second", "third", and the like are merely for descriptive purpose, but should not be construed as indicating or implying relative importance. "Vertical" is not vertical in the strict sense, but is within an allowable range of error. "Parallel" is not parallel in the strict sense, but is within an allowable range of error.

Orientation words appearing in the following description all indicate directions shown in the drawings, and do not limit specific structures of the present invention. In the description of the present invention, it should also be noted that, unless otherwise specified and defined, the terms "install", "couple", and "connect" are to be understood broadly, and may be, for example, a fixed connection, a detachable connection, or an integral connection; it can be a direct connection or indirect connection by an intermediary. For those ordinarily skilled in the art, specific meanings of the above terms in the present invention could be understood according to specific circumstances.

The phrase "embodiment" referred to in the present invention means that specific features, structures or characteristics described in conjunction with the embodiment can be contained in at least one embodiment of the present invention. This phrase appearing at various positions of the description does not necessarily refer to the same embodiment, or an independent or alternative embodiment mutually exclusive of another embodiment. Those skilled in the art understand, in explicit and implicit manners, that an embodiment described in the present invention can be combined with other embodiments.

In the description of the embodiments of the present invention, the term "and/or" is merely an association relationship describing associated objects, and indicates that three relationships may exist, for example, "A and/or B" may indicate three situations: A exists alone, both A and B exist, and B exists alone. In addition, the character "/" in the present invention generally means that associated objects before and after the character are in an "or" relationship.

As shown in FIG. 1 to FIG. 37, solutions of the present embodiment provide a dryer, including:

a case 1;

at least two inner tanks 2, where the at least two inner tanks 2 each include a side wall member 21 formed by sequentially connecting at least two side plates 211 into one piece, the at least two inner tanks 2 are each provided with an inner chamber 20, the two inner tanks 2 are provided side by side or stacked in the case 1, and side wall members 21 of the two inner tanks 2 are provided at intervals so as to form a barrier structure 3, where the barrier structure 3 is configured to block heat between the inner chambers 20 of the two inner tanks 2; and

air supply assemblies 4, provided in the case 1 and being in one-to-one correspondence with the inner chambers 20, where air supply ends of the air supply assemblies 4 are directed to the inner chambers 20.

In some embodiments, as shown in FIG. 1, FIG. 2, FIG. 24, and FIG. 25, the case 1 is configured to form a frame structure of the dryer, so as to play a role in providing a support force and forming an outer contour.

In some embodiments, a plurality of foot pads 11 are provided in a bottom portion of the case 1, and the foot pads 11 enable a certain spacing distance between the case 1 and a placement plane (such as a table top, a counter surface, and a ground), so as to facilitate heat dissipation of the dryer and wiring of a power cord 12.

In some embodiments, the case 1 is provided with a control panel 13, so that the dryer can be controlled to operate through the control panel 13.

In some embodiments, the control panel 13 can be provided to include several mechanical control buttons, and the dryer is controlled to operate through the mechanical control buttons.

In some embodiments, the control panel 13 includes a mechanical control button and a display screen, and the dryer is controlled to operate through cooperation between the mechanical control button and the display screen.

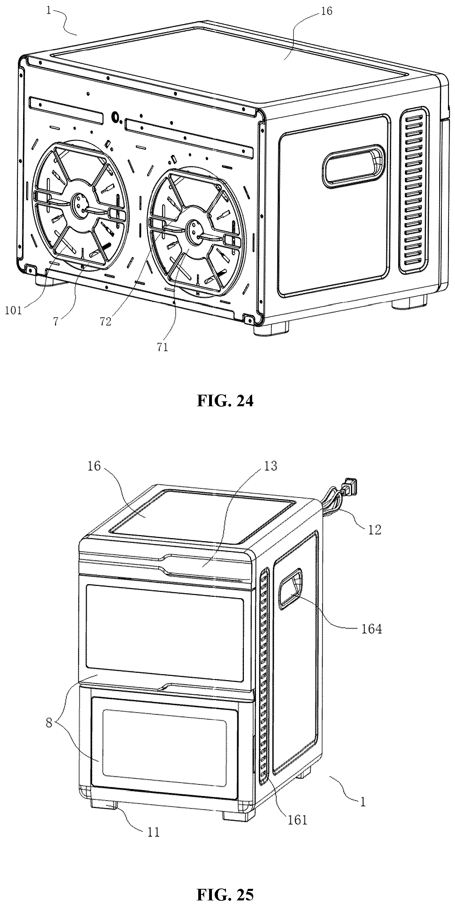

In some embodiments, the control panel 13 is configured as an integrated touch screen, as shown in FIG. 1 and FIG. 25.

For specific configuration and working principle of the above control panel 13, reference can be made to the prior art, which is not specifically limited herein.

In some embodiments, the inner tanks 2 can be understood as core components of the dryer after an outer shell 16 is removed. For a single one of the inner tanks 2, it includes the inner chamber 20 and a side wall structure enclosing the inner chamber 20. Therefore, the inner tank 2 includes, but is not limited to, a literal interpretation thereof, and includes, but is not limited to, application examples described in solutions of the present embodiment.

In some embodiments, the inner tanks 2 each include the side wall member 21 and the inner chamber 20, where the inner chamber 20 is configured to temporarily store food to be processed, and the side wall member 21 serves as at least part of the side wall structure of the inner chamber 20.

In some embodiments, the two inner tanks 2 are provided side by side, as shown in FIG. 1.

In some embodiments, the two inner tanks 2 are provided to be stacked, as shown in FIG. 25.

In some embodiments, the dryer in the solutions of the present embodiment can also be used for articles such as medicinal materials and vessels that need to be processed by air-drying, which is not specifically limited herein.

In some embodiments, the air supply assemblies 4 are configured to supply air into the inner chambers 20. For example, food to be processed is placed in the inner chambers 20, and then the air supply assemblies 4 are started to process the food in the inner chambers 20 by air-drying. In the above, since at least two inner tanks 2 are provided, at least two inner chambers 20 are also provided, and as the air supply assemblies 4 and the inner chambers 20 are provided in one-to-one correspondence, by controlling a specific air supply assembly 4 to operate, food in the specific inner chamber 20 can be air-dried, so that food processing operations in different inner chambers 20 can be performed independently of each other.

As an application example therein, two side plates 211 are provided, and the side wall members 21 have a cross section in an "L" shape; or

three side plates 211 are provided, and the side wall members 21 have a cross section in a "U" shape; or

four side plates 211 are provided, and the side wall members 21 have a cross section in a rectangular (i.e., a Chinese character "☐") shape.

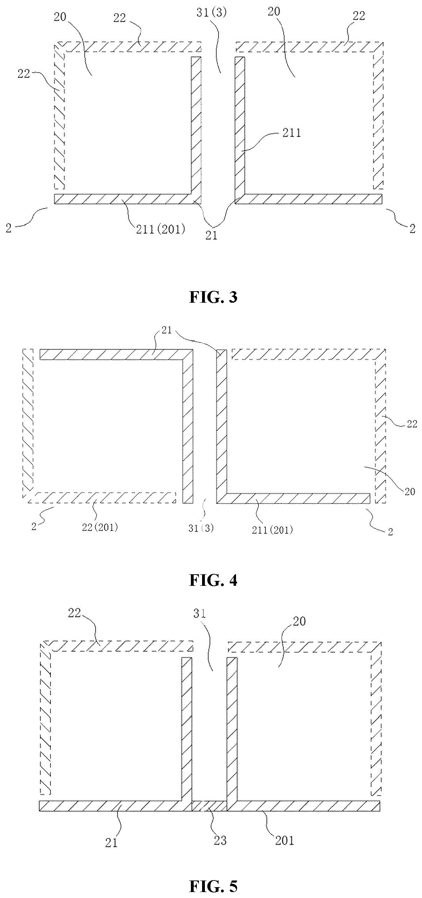

In some embodiments, as shown in FIG. 3 and FIG. 4, two side plates 211 can be provided on the side wall member 21, in which case the two side plates 211 are connected into one piece and form an "L" shape. When a cross section of the inner chambers 20 is in a rectangular shape, auxiliary plates 22 serving as the other two side surfaces need to be additionally added, and the added auxiliary plates 22 are connected to the side wall member 21 to form an enclosing side wall structure of the inner chamber 20.

In some embodiments, the auxiliary plates 22 can be an integrated member, as shown by the inner tank 2 located on the right in FIG. 3.

In some embodiments, the auxiliary plate 22 can be formed by connecting two separate plates, as shown by the inner tank 2 located on the left in FIG. 3.

In this case, a situation where the inner tanks 2 are provided side by side is taken as an example for description, and reference can be made to FIG. 3 to FIG. 6 for a method of forming the barrier structure 3.

When the inner tanks 2 are provided to be stacked, the barrier structure 3 can be formed by rotating the barrier structure 3, when the inner tank 2 is provided side by side, by 90 °, which will not be repeated herein.

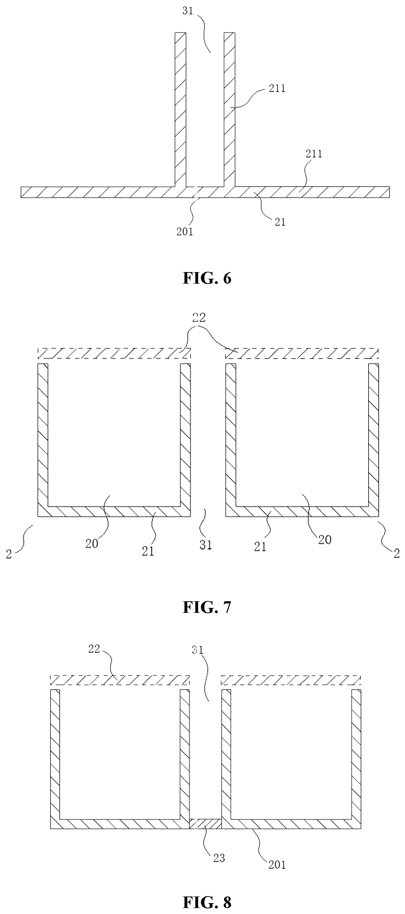

In some embodiments, as shown in FIG. 7, FIG. 8, FIG. 14 to FIG. 18, FIG. 22, and FIG. 26, three side plates 211 can be provided, and the three side plates 211 are connected into one piece and form a "U" shape. Herein, the case where the cross section of the inner chambers 20 is in a rectangular shape is still taken as an example for description, then it is feasible to add only one auxiliary plate 22, and then the auxiliary plate 22 is connected to the side wall member 21 to form an enclosing side wall structure of the inner chamber 20, as shown in FIG. 7 and FIG. 8.

In this case, a situation where the inner tanks 2 are provided side by side is taken as an example for description, and reference can be made to FIG. 7 to FIG. 12, FIG. 15, and FIG. 26 for a method of forming the barrier structure 3.

In some embodiments, four side plates 211 can be provided, in which case the four side plates 211 are connected into one piece and form a rectangular shape, that is, the cross section of the inner chambers 20 is in a rectangular shape, and the side wall member 21 serves as an enclosing side wall structure of the inner chamber 20.

In some embodiments, a situation where the inner tanks 2 are provided side by side is taken as an example for description, in which case the two side wall members 21 each takes one of the side plates 211 thereof as a bottom plate 201 of the inner tank 2, and the bottom plates 201 of the two inner tanks 2 can be connected into one piece by a connecting plate 23, as shown in FIG. 5 and FIG. 8.

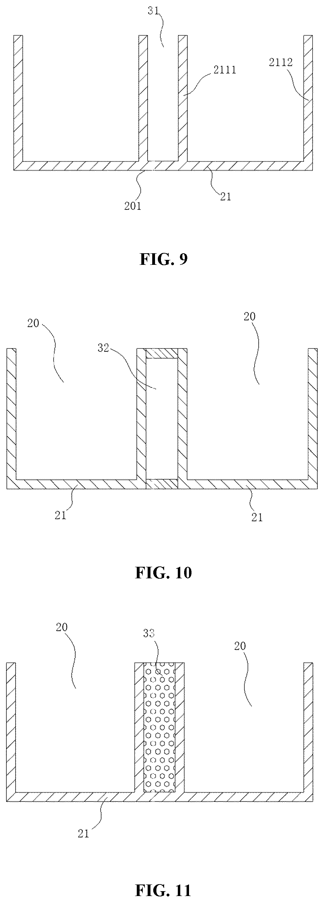

In some embodiments, the bottom plates 201 of the two inner tanks 2 are the same plate, as shown in FIG. 6 and FIG. 9.

As an application example therein, the side wall member 21 is molded as an integrated structure; or two adjacent side plates 211 on the side wall member 21 are spliced, and the two adjacent side plates 211 are sealed at a joint therebetween.

In some embodiments, the side wall member 21 is molded as an integrated structure, for example, by bending a whole plate, liquid cast molding and other methods.

In some embodiments, the side wall member 21 is molded by splicing, in which case the side plates 211 are independent plates, and then the side plates 211 are connected to each other so as to form one piece, where the side plates 211 can be connected to each by welding sealing.

In some embodiments, the side plates 211 can be connected to each other by fasteners such as screws. When the fasteners such as the screws are used for connection, a sealing rubber pad can be provided at a joint between the side plates 211, so as to ensure a sealing effect at the joint.

In some embodiments, glue is coated at the joint between the side plates 211, so as to realize a sealed connection between the two through the glue.

As an application example therein, the side plates 211 include a first side plate 2111 and a second side plate 2112, where the first side plate 2111 and the second side plate 2112 are respectively provided at two sides of the inner chamber 20; and

the first side plate 2111 and the second side plate 2112 are provided with a plurality of convex ribs 24 protruding towards the inner chambers 20. The plurality of convex ribs 24 are provided at intervals in a vertical direction, and the convex ribs 24 on the first side plate 2111 and the second side plate 2112 are corresponding to each other.

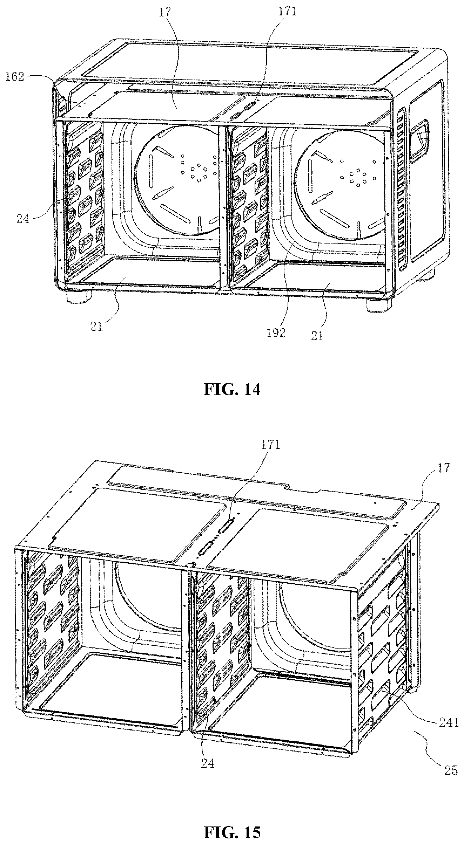

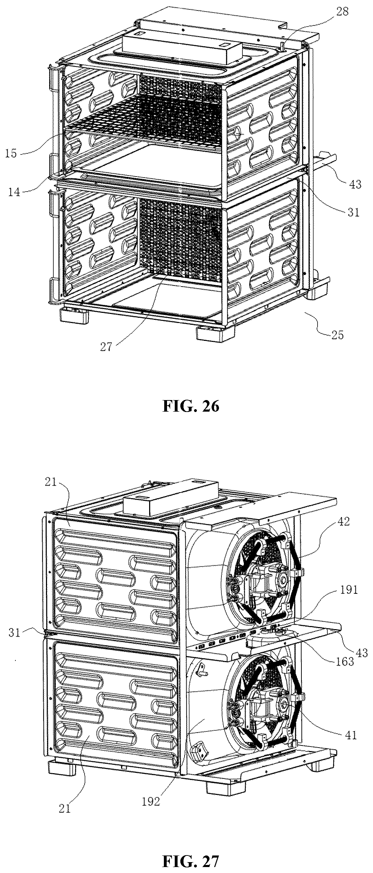

In some embodiments, as shown in FIG. 15 and FIG. 26, each of the inner chambers 20 is provided with the first side plate 2111 and the second side plate 2112, and the first side plate 2111 and the second side plate 2112 are provided on left and right sides of the inner chamber 20, respectively.

In some embodiments, the convex ribs 24 can be molded on the first side plate 2111 and the second side plate 2112 by a stamping method, in which case the convex ribs 24 protrude towards the inner chamber 20, while back parts of the convex ribs 24 form grooves 241 on back sides of the first side plate 2111 and the second side plate 2112. Such a method of forming the convex ribs 24 not only can facilitate improving structural strength of the first side plate 2111 and the second side plate 2112, but also can facilitate reducing weights of the first side plate 2111 and the second side plate 2112.

In some embodiments, the convex ribs 24 on the first side plate 2111 and the second side plate 2112 are symmetrically provided.

In some embodiments, the convex ribs 24 on the first side plate 2111 and the second side plate 2112 have a one-to-one correspondence only in position height, while the convex ribs 24 at the same height can be set with different shapes and sizes.

The convex ribs 24 provided can play a certain role in supporting, so as to facilitate fitting with a tray 14, a bracket 15 and the like. For example, food to be processed is placed on the tray 14, and then the tray 14 is put on the convex ribs 24 on two sides, so that the food to be processed can be located in a middle position of the inner chamber 20 during processing, and a better processing effect is rendered. By providing the convex ribs 24 at intervals in the height direction, it can facilitate installation and arrangement of a plurality of trays 14 and a plurality of brackets 15 in the same inner chamber 20, and a single tray 14 can have multiple position height placement options in the inner chamber 20, as shown in FIG. 26.

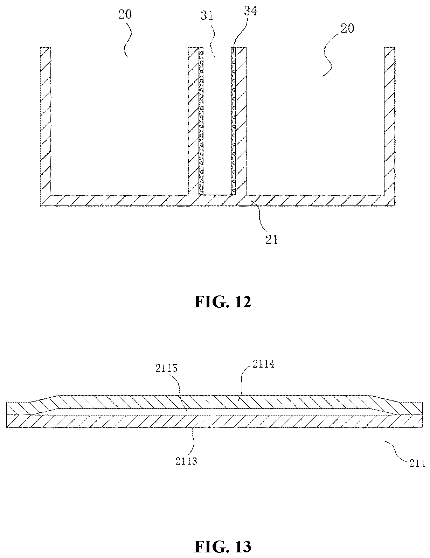

As an application example therein, as shown in FIG. 13, the side plates 211 include an inner side plate 2113 and an outer side plate 2114, and a hollow interlayer 2115 is provided between the inner side plate 2113 and the outer side plate 2114.

In some embodiments, each of the side plates 211 is provided with a double-layer structure, in which case each of the side plates 211 includes the inner side plate 2113 and the outer side plate 2114, and the inner side plate 2113 and the outer side plate 2114 are hermetically connected at edges thereof, for example, sealed by welding; and the hollow interlayer 2115 is formed between the inner side plate 2113 and the outer side plate 2114. By providing the hollow interlayer 2115, heat preservation performance of the inner chambers 20 can be improved, and performance of blocking heat between two adjacent inner chambers 20 can be further improved.

As an application example therein, the inner side plate 2113 and the outer side plate 2114 have different thermal conductivity coefficients.

In some embodiments, the inner side plate 2113 and the outer side plate 2114 can be made from the same material, for example, the inner side plate 2113 and the outer side plate 2114 are both made from a metallic material, in which case the inner side plate 2113 and the outer side plate 2114 have close or the same thermal conductivity coefficient

In some embodiments, the inner side plate 2113 and the outer side plate 2114 can be made from different materials. For example, the inner side plate 2113 can be made from a metallic material, in which case the outer side plate 2114 can be made from a colloid material. For another example, the inner side plate 2113 can be made from a colloid material, and the outer side plate 2114 is made from a metallic material, in which case the inner side plate 2113 and the outer side plate 2114 have different thermal conductivity coefficients.

By selecting and designing the thermal conductivity coefficients of the inner side plate 2113 and the outer side plate 2114, the side plate 211 formed by the inner side plate 2113 and the outer side plate 2114 can have better heat insulation performance and facilitate cost control.

As an application example therein, the barrier structure 3 is an air layer 31; and

the case 1 includes an outer shell 16, where the outer shell 16 is provided with a plurality of vent holes 161, a flow space 162 is formed between the outer shell 16 and the inner tanks 2, and the flow space 162 communicates the air layer 31 with the vent holes 161.

In some embodiments, the barrier structure 3 is the air layer 31 formed by providing the two side plates 211 at intervals, for which reference can be made to FIG. 3 to FIG. 9, FIG. 15, and FIG. 26.

In some embodiments, as shown in FIG. 15 and FIG. 26, the at least two inner tanks 2, after being mounted, form an inner tank assembly 25, the case 1 includes the inner tank assembly 25 and the outer shell 16, in which case the outer shell 16 is covered on the inner tank assembly 25, so as to form the flow space 162 between the inner tank assembly 25 and the outer shell 16.

In some embodiments, as shown in FIG. 14 and FIG. 15, when the two inner tanks 2 are provided side by side, the flow space 162 is formed between left and right outer side surfaces of the inner tank assembly 25 and the outer shell 16, and between a top portion of the inner tank assembly 25 and the outer shell 16. As shown in FIG. 25 to FIG. 27, when the two inner tanks 2 are provided to be stacked, the flow space 162 can be formed between the left and right outer side surfaces of the inner tank assembly 25 and the outer shell 16. In this way, the air layer 31 can always be located in a coverage range of the flow space 162.

As an application example therein, the vent holes 161 are provided in a strip shape, and the plurality of vent holes 161 are provided side by side on a side surface of the outer shell 16 in a vertical direction.

In some embodiments, as shown in FIG. 1 and FIG. 25, the vent holes 161 are provided on left and right side surfaces of the case 1.

As an application example therein, as shown in FIG. 14 to FIG. 16, the case 1 includes an upper cover plate 17, the side wall members 21 have a cross section in a "U" shape, and U-shaped openings of the two side wall members 21 are directed to the upper cover plate 17 and are hermetically connected to the upper cover plate 17; and

the upper cover plate 17 is provided with a first through hole 171 communicating with the air layer 31.

In some embodiments, the side wall members 21 have the cross section provided in the "U" shape, and then the inner tanks 2 are formed by connecting the side wall members 21 and the upper cover plate 17, in which case inner side surfaces of three side plates of each side wall member 21 and an inner side surface of the upper cover plate 17 together serve as the side wall structure of the inner chamber 20. After the two side wall members 21 are connected with the upper cover plate 17, the inner tank assembly 25 can be formed, as shown in FIG. 15.

By providing one upper cover plate 17, and mounting the side wall members 21 on the upper cover plate 17 so as to form the inner tank assembly 25, the upper cover plate 17 can serve as a constituent member of the inner chambers 20, so as to reduce an amount of materials used for the side wall members 21, and meanwhile can also serve as a top side surface of the inner tank assembly 25, so as to improve structural strength of the inner tank assembly 25, and improve stability of the inner chambers 20 in applications.

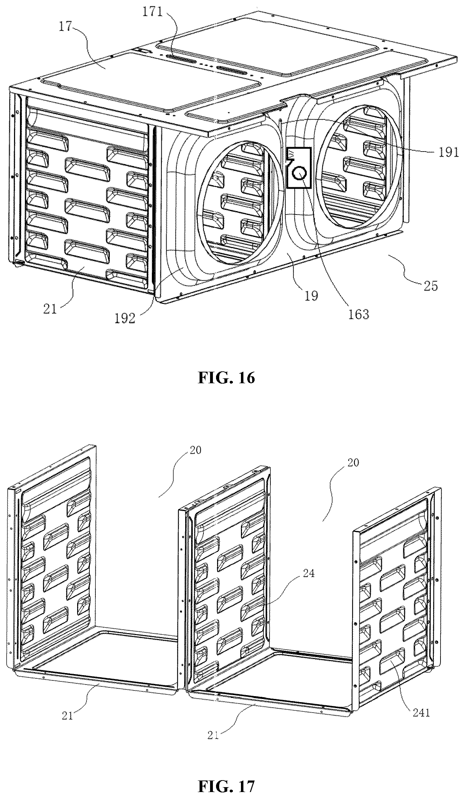

In some embodiments, as shown in FIG. 17, FIG. 18, and FIG. 22, bent edges 2116 are provided at ends of the first side plate 2111 and the second side plate 2112, and part of the bent edges 2116 is provided with mounting holes 2117; and the two inner chambers 20 can be connected with each other by passing fasteners such as bolts through the mounting holes 2117.

In some embodiments, through the connection between the bent edges of the first side plate 2111 and the second side plate 2112 and the upper cover plate 17, installation of the side wall members 21 and formation of the air layer 31 can also be realized. In this case, the upper cover plate communicates with the air layer through the first through hole provided thereon.

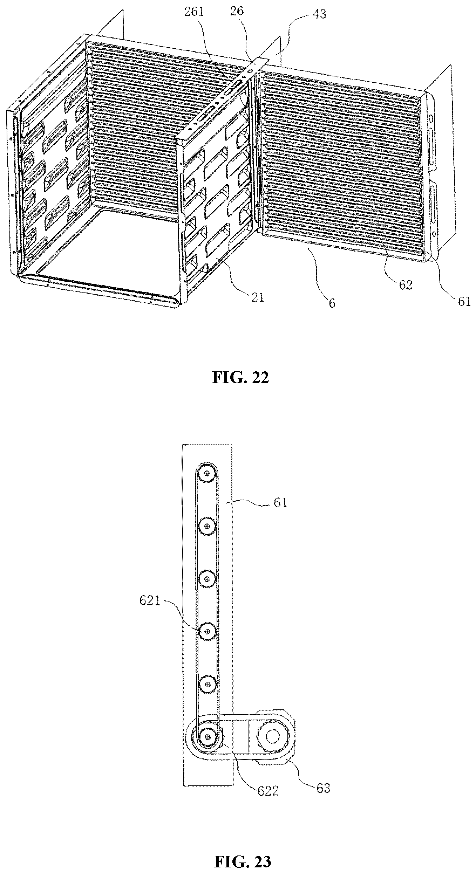

As an application example therein, as shown in FIG. 22, a sealing rubber strip 26 is provided between the side wall members 21 and the upper cover plate 17; and

the sealing rubber strip 26 has a width corresponding to a thickness of the side plates 211; or the sealing rubber strip 26 has a width corresponding to a width of the barrier structure 3, the sealing rubber strip 26 is provided with a second through hole 261, and the second through hole 261 is corresponding to the first through hole 171.

In some embodiments, the sealing rubber strip 26 is designed corresponding to a width of the bent edges 2116 on the first side plate 2111 and the second side plate 2112, respectively, in which case it is possible to provide the first through hole 171 only on the upper cover plate 17, and the air layer 31 communicates with the outside directly through the first through hole 171.

In some embodiments, the sealing rubber strip 26 can also be designed corresponding to a width of the air layer 31, so that after a single sealing rubber strip 26 is installed, sealing between the side plates 211 located on two sides of the air layer 31 and the upper cover plate 17 can be simultaneously realized, as shown in FIG. 22; and in this case, the second through hole 261 is provided on the sealing rubber strip 26, and the air layer 31 communicates with the outside through the second through hole 261 and the first through hole 171 in sequence.

By providing the air layer 31, the two adjacent inner chambers 20 can be conveniently blocked, so as to avoid influence of temperature in one inner chamber 20 on temperature in the other inner chamber 20, that is, to avoid a phenomenon of influenced temperature; and in this case, a temperature transmitted will spread out into the air layer 31, and by communicating the air layer 31 with the outside, it can facilitate dissipation of heat in the air layer 31.

In some embodiments, as shown in FIG. 2, the case 1 includes a bottom side plate 18, the bottom side plate 18 is provided with several fourth through holes 181, and the fourth through holes 181 communicate with the air layer 31. In this case, the heat in the air layer 31 can be directly dissipated to the outside from the fourth through holes 181.

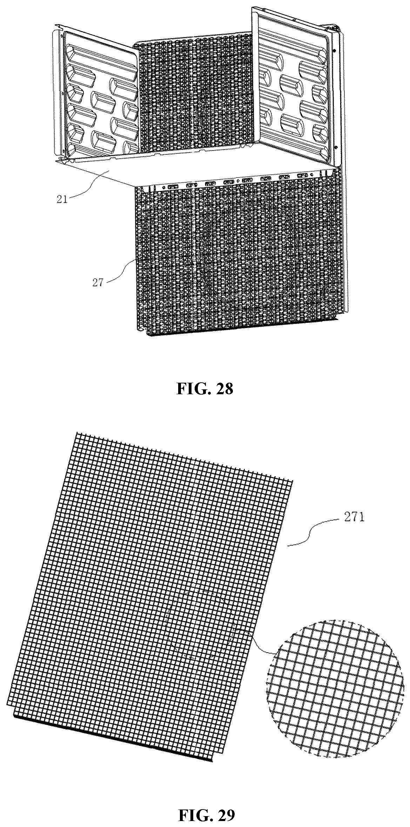

As an application example therein, as shown in FIG. 28, the case 1 includes a rear cover plate 19, a rear end of the side wall members 21 is hermetically connected to the rear cover plate 19; and

the rear cover plate 19 is provided with third through holes 191 communicating with the air layer 31.

As an application example therein, the case 1 is provided therein with a discharge-promoting fan 163, where an air supply end of the discharge-promoting fan 163 is provided towards the air layer 31; and

airflow enters the air layer 31 under the action of the discharge-promoting fan 163, passes through the flow space 162 and then is discharged from the vent holes 161.

In some embodiments, the discharge-promoting fan 163 is provided at a rear side of the rear cover plate 19, and the air supply end of the discharge-promoting fan 163 is provided towards the third through holes 191, so that the airflow can be input into the air layer 31 from the third through holes 191, and then output from the flow space 162 and the vent holes 161, so as to improve controllability of temperature in the air layer 31.

In some embodiments, the discharge-prompting fan 163 can be configured in an air blowing mode or in an air suction mode. When the air blowing mode is configured, the discharge-promoting fan 163 is provided at the rear side of the rear cover plate 19; and when the air suction mode is configured, the discharge-prompting fan 163 can be provided in the flow space 162.

As an application example therein, as shown in FIG. 28, at least one barrier net 27 is provided between the side wall members 21 and the rear cover plate 19; and

the side wall members 21 and the barrier net 27 are hermetically connected at a joint therebetween, and the rear cover plate 19 and the barrier net 27 are hermetically connected at a joint therebetween.

By providing the barrier net 27, a safety protection degree of the dryer can be improved, for example, users can be prevented from accidentally touching the air supply assembly 4 located at a rear end of the dryer in use, thereby avoiding accidental injury to the users.

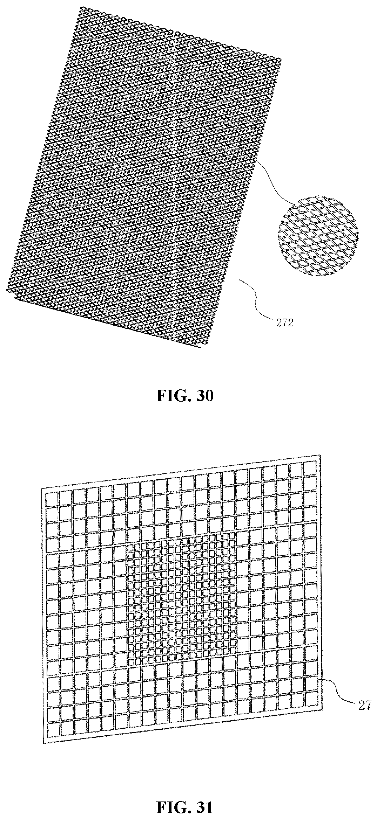

In some embodiments, as shown in FIG. 28, the barrier net 27 includes a first barrier net 271 and a second barrier net 272, where the first barrier net 271 and the second barrier net 272 are provided to be stacked. In the above, the first barrier net 271 and the second barrier net 272 can be provided with the same or different meshes; for example, the meshes of the first barrier net 271 are provided in a square shape, as shown in FIG. 29; and then the meshes of the second barrier net 272 are provided in a diamond shape, as shown in FIG. 30.

In some embodiments, the two inner chambers 20 use the same barrier net 27. The two adjacent inner chambers 20 are sealed and blocked by the barrier net 27, so that overall structural strength of the inner tank assembly 25 can be improved, and meanwhile, in cooperation with configuration of the third through holes 191, transmission of heat on the barrier net 27 can be reduced, which is more ingenious in design.

As an application example therein, the rear cover plate 19 is provided thereon with air guide structures 192 in a horn shape corresponding to the air supply assemblies 4.

In some embodiments, the air supply assembly 4 is provided at a narrow end of the horn shape of each air guide structure 192, a flared end of the horn shape of the air guide structure 192 is provided towards the inner chamber 20, and a shape of the flared end of the air guide structure 192 is adapted to a shape of a cross section of the inner chamber 20 corresponding thereto.

By providing the air guide structures 192, uniformity of air supply of the air supply assemblies 4 can be improved, so that food can be subjected to a more uniform air-drying effect in the inner chambers 20, thus improving food preparation quality and also facilitating reduction of energy consumption.

As an application example therein, a mesh density of the barrier net 27 is uniformly arranged; or

the mesh density of the barrier net 27 is decreased from a central area of the inner chambers 20 to an outer edge.

In some embodiments, as shown in FIG. 29 and FIG. 30, the barrier net 27 can be provided with a uniform mesh density, for example, each mesh is provided in a polygonal shape with a consistent size; especially when being equipped with the air guide structures 192, a mesh structure of the barrier net 27 will not have too much influence on the uniformity of air supply.

In some embodiments, as shown in FIG. 31, the mesh density of the barrier net 27 can be provided to be decreased from the central area of the inner chambers 20 to the outer edge. This structural form in applications not only can play a protective effect so as to prevent the users from directly touching the air supply assemblies 4, but also can meanwhile reduce influence of inconsistent food processing degrees brought about centralized action of the airflow output by the air supply assemblies 4 on the central area of the inner chambers 20.

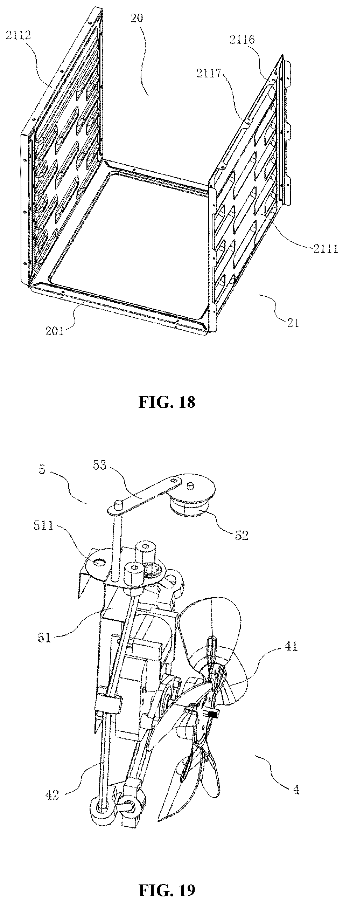

As an application example therein, as shown in FIG. 19 and FIG. 27, the air supply assemblies 4 each include an air blower 41 and an electric heating member 42, where the air blower 41 is configured to transfer heat dissipated by the electric heating member 42 into the inner chamber.

In some embodiments, as shown in FIG. 27, a front side of the air blower 41 is provided towards the inner chamber 20, the electric heating member 42 is provided at a rear side of the air blower 41, and the air blower 41 is provided on the rear cover plate 19.

In some embodiments, the electric heating member 42 can be provided in an application form such as an electric heating wire, or an electric heating tube.

As an application example therein, the inner chambers 20 are each provided with a temperature sensor 28 configured to detect an operating temperature, and the operating temperature of the inner chambers 20 is set to be less than 100 °C.

In some embodiments, each of the inner chambers 20 is provided with the temperature sensor 28, so as to detect and feed back the operating temperature of the inner chamber 20 through the temperature sensor 27.

In some embodiments, the operating temperature of the inner chambers 20 is controlled to be less than 100 °C, and such temperature control can improve air-drying quality of food and improve taste.

As an application example therein, a wind shielding plate 43 is provided between two adjacent air supply assemblies 4.

In some embodiments, the wind shielding plate 43 is installed and provided on the rear cover plate 19, so as to block the two adjacent air supply assemblies 4, thus avoiding the phenomenon of influenced temperature between the two adjacent air supply assemblies 4.

In some embodiments, two wind shielding plates 43 are provided, and the discharge-promoting fan 163 is provided between the two wind shielding plates 43.

As an application example therein, rotational directions of the air blowers 41 of the two adjacent air supply assemblies 4 are provided to be opposite. Herein, a case where two air blowers 41 are provided is taken as an example for description, and an operator stands in front of the dryer:

in some embodiments, when the two inner chambers 20 are provided side by side in a horizontal direction, the air blower 41 located on a left side can be configured to rotate counterclockwise, and the air blower 41 located on a right side can be configured to rotate clockwise; and

in some embodiments, when the two inner chambers 20 are provided to be stacked in a vertical direction, the air blower 41 located at an upper side can be configured to rotate counterclockwise, and the air blower 41 located at a lower side can be configured to rotate clockwise.

By designing the rotational directions of the air blowers 41, when the air blowers 41 output hot airflows, main flowing directions of the hot airflows face back to the air layer 31 between the two inner chambers 20, so that rapid temperature elevation caused by direct impact of the hot airflows on the air layer 31 can be avoided. Moreover, by providing the rotational directions of the two adjacent air blowers 41 to be opposite to each other, vibration amplitude and running noise during equipment running can also be effectively reduced.

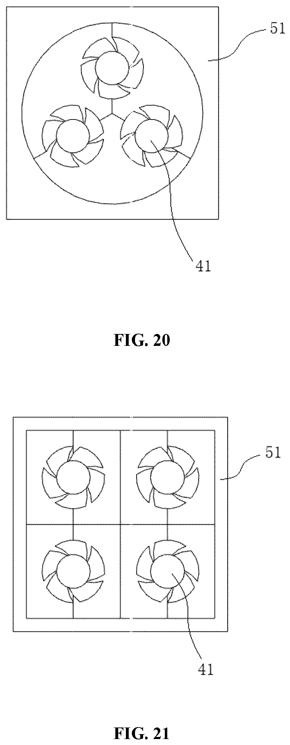

As an application example therein, as shown in FIG. 20 and FIG. 21, the air supply assembly 4 is provided with at least two air blowers 41.

In some embodiments, as shown in FIG. 20, the same air supply assembly 4 is provided with three air blowers 41, and the three air blowers 41 are provided in an equilateral triangle.

In some embodiments, as shown in FIG. 21, the same air supply assembly 4 is provided with four air blowers 41, and the four air blowers 41 are provided in a matrix.

However, in practical applications, the number of the air blowers 41 to be provided can be selected according to a volume of the inner chambers 20 and a size and power of the air blowers 41, which is not specifically limited herein.

As an application example therein, as shown in FIG. 19, the case 1 is provided with first air control devices 5, where the first air control devices 5 are in one-to-one correspondence with the air supply assemblies 4, and the first air control devices 5 each include an oscillation frame 51 and a first driver 52 configured to drive the oscillation frame 51 to oscillate; and

the air blowers 41 are provided on the oscillation frames 51.

In some embodiments, the oscillation frames 51 can be rotatably mounted on the case 1 around a shaft contact 511, and the air blowers 41 of the air supply assemblies 4 are mounted on the oscillation frames 51, so that the air blowers 41 can oscillate along with rotation of the oscillation frames 51, and an oscillating motion of the air blowers 41 can just be realized.

In some embodiments, the first driver 52 is provided as a first motor, in which case the first motor is in transmission connection with the oscillation frame 51 through an oscillation arm 53, so that by controlling driving of the first motor, an oscillation movement of the oscillation frame 51 can be controlled.

By providing the first air control devices 5, the oscillating motion of the air blowers 41 of the air supply assemblies 4 can be realized, so as to realize multi-angle air supply of the air blowers 41 in the inner chambers 20, and improve the air-drying preparation effect of food.

As an application example therein, as shown in FIG. 22 and FIG. 23, the case 1 is provided with second air control devices 6, where the second air control devices 6 are in one-to-one correspondence with the inner chambers 20, and the second air control devices 6 each include a mounting frame 61, a plurality of air guide plates 62 movably provided on the mounting frame 61, and a second driver 63 configured to drive the air guide plates 62 to oscillate; and

the air guide plates 62 are provided between the air blower 41 and the inner chamber 20.

In some embodiments, each of the air guide plates 62 is rotatably mounted on the mounting frame 61, the second driver 63 is configured as a second motor, and the second motor is in transmission connection with the air guide plates 62. By controlling operation of the second motor, an oscillation angle of the air guide plates 62 can be controlled, so that the uniformity of air supply of the air blower 41 can be improved by the air guide plates 62.

In some embodiments, as shown in FIG. 23, each of the air guide plates 62 is provided with a first gear 621 at an end portion, and the first gears 621 on different air guide plates 62 are in transmission connection through a chain, so that when one of the air guide plates 62 rotates, the other air guide plates 62 also rotate therewith.

In some embodiments, the first gears 621 on different air guide plates 62 are in transmission connection through a gear rack.

In some embodiments, one of the air guide plates 62 is provided with a second gear 622 at an end portion, and the second motor is meshed with the second gear 622, so that one of the air guide plates 62 is driven by the second motor to rotate, and further the other air guide plates 62 are driven to rotate.

As an application example therein, as shown in FIG. 10, the barrier structure 3 is a vacuum space 32.

In some embodiments, after the two adjacent side wall members 21 are provided at intervals, a periphery of the air layer 31 formed between the two adjacent side wall members 21 is sealed, and an air suction operation is performed on the sealed air layer 31, so that the vacuum space 32 is formed between the two side wall members 21. By forming the vacuum space 32, the heat insulation performance can be further improved.

As an application example therein, as shown in FIG. 11, the barrier structure 3 is filled therein with a heat insulation filler 33.

In some embodiments, a heat insulation filler 33 is filled in the air layer 31 formed between the two adjacent side wall members 21, so that by filling the provided heat insulation filler 33, the heat transmission between the two side wall members 21 can be reduced.

In some embodiments, as shown in FIG. 12, two inner side surfaces of the air layer 31 are each coated with a heat insulation coating layer 34, so as to reduce the heat transmission between the two side wall members 21.

As an application example therein, as shown in FIG. 1 and FIG. 25, the case 1 is provided with a lifting groove 164 on a side surface.

In some embodiments, both left and right side surfaces of the case 1 are provided with the lifting groove 164, so that by providing the lifting grooves 164, a holding effect of carrying the dryer by a person when carrying the dryer can be improved, thus improving reliability and security of a carrying operation.

As an application example therein, as shown in FIG. 2, the case 1 is provided with a plug receiving groove 182, and the plug receiving groove 182 is provided therein with a socket structure for plugging a plug.

In some embodiments, the plug receiving groove 182 is provided to be recessed in the bottom side plate 18 of the case 1. By providing the plug receiving groove 182 on the bottom side plate 18 of the case 1, influence of providing the plug receiving groove 182 on appearance of the dryer can be reduced.

As an application example therein, as shown in FIG. 24, the case 1 is provided with a dustproof cover 7 on a rear side.

In some embodiments, in order to facilitate circulation of airflow, several air holes 101 are provided on a rear side plate of the case 1, and the dustproof cover 7 is provided outside the several air holes 101, so as to avoid accidental entry of external debris into the case 1 to affect application of the air supply assemblies 4, and improve application safety.

In some embodiments, the dustproof cover 7 includes a cover body 71, where the cover body 71 is configured to be installed on the case 1, the cover body 71 is provided with a plurality of hollow areas 72, and a gauze is provided in the hollow areas 72.

As an application example therein, as shown in FIG. 1 and FIG. 25, the case 1 is provided with cabinet doors 8, and the number of the cabinet doors 8 is in correspondence with the number of the inner chambers 20; or the at least two inner chambers 20 share one cabinet door 8.

In some embodiments, the number of the cabinet doors 8 is set to be in correspondence with the number of the inner chambers, so that use of a specific one of the inner chambers 20 can be independently controlled in use.

In some embodiments, a plurality of the inner chambers 20 can also be provided to share one cabinet door 8, which is not specifically limited herein.

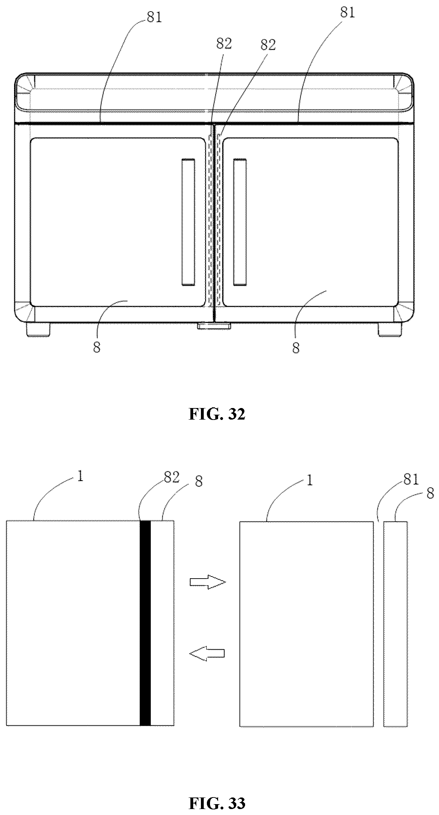

As an application example therein, as shown in FIG. 32 and FIG. 33, the inner chambers 20 and the cabinet doors 8 are provided with vent gaps 81 therebetween, and air delivered by the air supply assemblies 4 to the inner chambers 20 is discharged to the outside from the vent gaps 81; and the vent gaps 81 of the two adjacent inner chambers 20 are provided to be sealed and blocked from each other.

In some embodiments, the cabinet doors 8 each can be provided with a sealing separator 82 on one or more edges. When the cabinet door 8 is closed on the inner chamber 20, the sealing separator 82 is clamped between an edge of the inner chamber 20 and the edge of the cabinet door 8, so that multiple edges of the inner chamber 20 and the cabinet door 8, except edges where the sealing separator 82 is located, cannot be completely attached, so as to form the vent gap 81.

In some embodiments, the seal separator 82 is provided on one or more edges of the inner chambers 20.

In some embodiments, a solution in which the two inner chambers 20 are provided is taken as an example for description, in which case the two inner chambers 20 are correspondingly provided with the cabinet door 8, respectively,. In the above, when the two inner chambers 20 are provided side by side on the left and right, door shafts of the two cabinet doors 8 are respectively provided on left and right edges of the case 1, in which case the sealing separators 82 are provided between the two inner chambers 20 on the left and right, as shown in FIG. 32. When the two inner chambers 20 are provided to be vertically stacked, the door shafts of the two cabinet doors 8 can be provided on the same side edge of the case 1, and can also be provided on left and right edges of the case 1, respectively, in which case the sealing separators 82 are provided between the upper and lower inner chambers 20.

In some embodiments, the sealing separators 82 are provided as sealing strips, and can play a role in shock absorption, water resistance, sound insulation, heat insulation, dust prevention, and the like. It can be understood that, the sealing strips can be made from a material such as rubber, plastic, paper, and a metal material.

By providing the vent gaps 81, each of the inner chambers 20 can be provided with an independent air circulation channel, and respective independent drying effect is better. By providing the sealing separators 82, different inner chambers 20 can be blocked at an output end of airflow, so as to avoid interference between airflows output from the adjacent inner chambers 20, and the phenomenon of influenced temperature and odor between the two inner chambers 20 can also be avoided, thus improving users' using experience.

As an application example therein, a ratio of a flow area of the vent gap 81 to a volume of the inner chamber 20 is:

$$1 \text{ mm}^2{:}10400 \text{ mm}^3 - 1 \text{ mm}^2{:}5200 \text{ mm}^3.$$

In some embodiments, the ratio of the flow area of the vent gap 81 to the volume of the inner chamber 20 is: $1 \text{ mm}^2{:}7800 \text{ mm}^3$

In some embodiments, the flow area of the vent gap 81 can be understood as: in a closed state between the cabinet door 8 and the inner chamber 20, except the edge where the sealing separator 82 is located, a product of length of the other edges multiplied by a spacing distance between the cabinet door 8 and the inner chamber 20.

In some embodiments, values of the spacing distance between the cabinet door 8 and the inner chamber 20 include a maximum distance, a minimum distance, and an average distance therebetween.

By designing numerical values of the flow area of the vent gap 81 and the volume of the inner chamber 20, it can facilitate controlling a vent volume of the inner chamber 20 when performing drying, so as to achieve a better temperature control effect, and can improve a flavor effect of food prepared by drying the food.

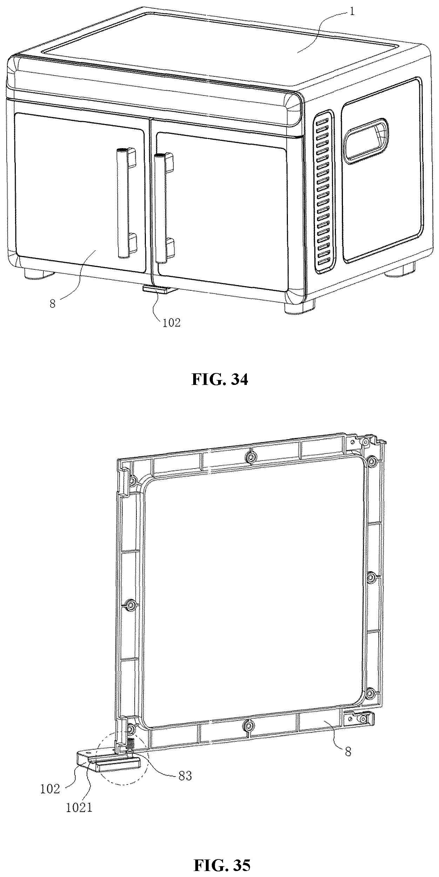

According to the present invention, as shown in FIG. 34 to FIG. 37, the case 1 is provided with a bearing portion 102, the cabinet doors 8 are each provided with an abutment portion, and the abutment portion can move to the bearing portion 102 with closing of the cabinet door 8, so as to support the cabinet door 8 through the bearing portion 102; and the bearing portion 102 is provided with a first fitting portion, the cabinet door 8 is provided with a second fitting portion, and the second fitting portion can form a locking connection with the first fitting portion along with the closing of the cabinet door 8.

In some embodiments, the bearing portion 102 is provided in the bottom portion of the case 1, and the abutment portion is a bottom end surface of the cabinet door 8.

In some embodiments, the first fitting portion and the second fitting portion are engaged with each other so as to form the locking connection. A mode of engagement herein includes, but is not limited to, an engagement relationship formed by plug fitting between a pin and a slot.

In some embodiments, the first fitting portion and the second fitting portion are adsorbed to each other so as to form the locking connection, for example, the first fitting portion and the second fitting portion are provided in a form of magnetic attraction.

By providing the bearing portion 102, the cabinet door 8 can be supported at least in a closed state, so as to reduce application fatigue and wear at a joint between the cabinet door 8 and the case 1, prolong service lifetime of the joint between the cabinet door 8 and the case 1, and avoid a phenomenon of premature corner lowering or drooping of the cabinet door 8 in use.

By providing the first fitting portion and the second fitting portion, stability of the cabinet door 8 in a closed state can be improved, and accidental disengagement of the cabinet door 8 from the support of the bearing portion 102 can be avoided, so that the user can have better using experience.

As an application example therein, as shown in FIG. 34, one end of the bearing portion 102 is connected to the case 1, and the other end is provided to protrude towards a front side surface of the case 1; and

the bearing portion 102 is detachably connected to the case 1; or the bearing portion 102 is integrated with the case 1.

In some embodiments, the bearing portion 102 and the case 1 are detachably connected, for example, the bearing portion 102 is mounted and fixed on the case 1 by a fastener such as a bolt.

In some embodiments, the bearing portion 102 is integrated with the case 1; for example, the bearing portion 102 is fixed on the case 1 by welding; and for another example, the bearing portion 102 and the front side surface of the case 1 are formed by stamping.

By providing the bearing portion 102 in a form of protruding towards the front side surface of the case 1, it can be better fitted with an application state of the cabinet door 8 on the case 1, so that the cabinet door 8 can be supported and borne by the bearing portion 102.

As an application example therein, as shown in FIG. 35 to FIG. 37, the first fitting portion is a locking slot 1021 provided on the bearing portion 102, the second fitting portion is a locking pin 83 provided on the cabinet door 8, and the locking pin 83 can be moved to extend into the locking slot 1021.

As an application example therein, the first fitting portion is a locking pin 83 provided on the bearing portion 102, the second fitting portion is a locking slot 1021 provided on the cabinet door 8, and the locking pin 83 can be moved to extend into the locking slot 1021.

Through the engagement connection between the locking pin 83 and the locking slot 1021, a locking state of the cabinet door 8 after being closed can be conveniently maintained, thus avoiding detachment of the cabinet door 8 from the support of the bearing portion 102 caused by accidental touch, and facilitating improving the reliability of the dryer in use.

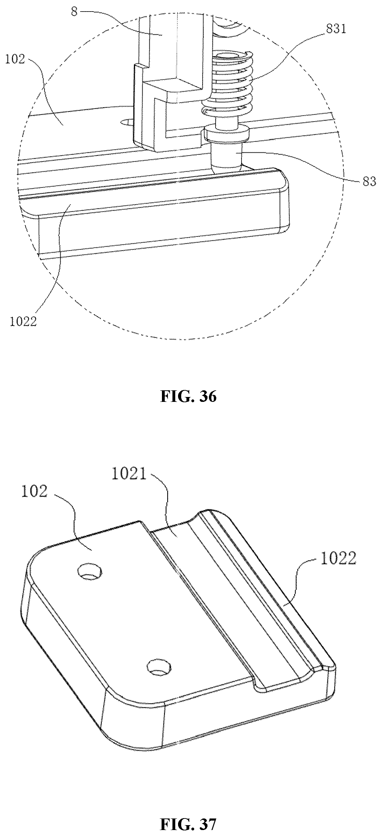

As an application example therein, as shown in FIG. 36, the locking pin 83 is provided with an elastic element 831, and the elastic element 831 is connected to the locking pin 83, and is configured to provide a pre-tightening force to the locking pin 83.

In some embodiments, a tail end of the locking pin 83 is provided to extend out of the cabinet door 8, a body of the locking pin 83 is slidably provided in the cabinet door 8, and the elastic element 831 is connected to the body of the locking pin 83 and provided inside the cabinet door 8, as shown in FIG. 36.

In some embodiments, the elastic element 831 is a spring, and the spring is sleeved on the body of the locking pin 83.

By providing the elastic element 831, a certain pre-tightening force can be provided to the locking pin 83, so that the locking pin 83 can have a function of automatic reset, so that flexibility of the locking pin 83 in use is improved, and reliability of engagement between the locking pin 83 and the locking slot 1021 can be enhanced.

As an application example therein, as shown in FIG. 36 and FIG. 37, the tail end of the locking pin 83 is provided in a spherical shape, and an inner wall surface of the locking slot 1021 is provided as a cambered surface; and/or a front end of the bearing portion 102 is provided with an inclined guide surface 1022.

In some embodiments, the body of the locking pin 83 is provided as a cylinder, and the tail end of the locking pin 83 is provided in a spherical shape, so that through cooperation with the use of the elastic element 831, smoothness of contact between the locking pin 83 and the bearing portion 102 can be improved.

In some embodiments, at least one inner wall surface of the locking slot 1021 is provided as a cambered surface, and the cambered surface is located in a detachment direction of the locking pin 83. When the cabinet door 8 is opened from a closed state, the spherical tail end of the locking pin 83 is in contact with the cambered surface of the locking slot 1021, in which case a force required for the user to open the cabinet door 8 can be reduced.

By designing the shape of the tail end of the locking pin 83 and the inner wall surface of the locking slot 1021, the user can conveniently open the cabinet door 8.

In some embodiments, the inclined guide surface 1022 is provided on a top end surface of the bearing portion 102, and a lower end of the inclined guide surface 1022 is connected to a front side surface of the bearing portion 102.

By providing the inclined guide surface 1022, a certain guiding effect can be achieved when closing the cabinet door 8, thus improving smoothness of the cabinet door 8 in a closing operation.

Compared with the prior art, the technical solutions of the embodiments of the present invention at least have the following beneficial effects.

In the solutions of the embodiments, by forming the barrier structure 3 between the side wall members 21 of two inner tanks, the inner chambers 20 of the two inner tanks 2 can be blocked by the barrier structure 3, so that heat transmission between the two adjacent inner chambers 20 can be reduced, the influence of influenced temperature and tainted odor between different inner chambers 20 can be reduced and even avoided, and independence of processing food between different inner chambers 20 can be improved, so that users can have better using experience.

Finally, it should be noted that various embodiments above are merely used for illustrating the technical solutions of the present invention, rather than limiting the present invention. While the detailed description is made to the present invention with reference to various preceding embodiments, those ordinarily skilled in the art should understand that they still could modify the technical solutions described in the various preceding embodiments, or make equivalent substitutions to some or all of the technical features therein. These modifications or substitutions do not make essence of corresponding technical solutions depart from the scope of the technical solutions of various embodiments of the present invention, and they should be covered within the scope of the claims and the description of the present invention. Particularly, various technical features mentioned in various embodiments can be combined in any form as long as there is no structural conflict. The present invention is not restricted to specific embodiments disclosed herein, but covers all technical solutions falling within the scope of the claims.

## Claims

1. A dryer, **characterized by** comprising:

   a case (1);
   at least two inner tanks (2), wherein the at least two inner tanks (2) each comprise a side wall member (21) formed by sequentially connecting at least two side plates (211) into one piece, the at least two inner tanks (2) are each provided with an inner chamber (20); the two inner tanks (2) are provided side by side or stacked in the case (1), and the side wall members (21) of the two inner tanks (2) are provided at intervals so as to form a barrier structure (3), wherein the barrier structure (3) is configured to block heat between the inner chambers (20) of the two inner tanks (2); and

air supply assemblies (4), provided in the case (1) and being in one-to-one correspondence with the inner chambers (20), wherein the air supply assemblies (4) each have an air supply end directed to the inner chambers (20),

wherein the case (1) is provided with cabinet doors (8), and the number of the cabinet doors (8) is in correspondence with the number of the inner chambers (20); or

the at least two inner chambers (20) share one cabinet door (8),

**characterized in that**, the case (1) is provided with a bearing portion (102), the cabinet doors (8) are provided with an abutment portion, and the abutment portion can move to the bearing portion (102) with closing of the cabinet doors (8), so as to support the cabinet doors (8) through the bearing portion (102); and

the bearing portion (102) is provided with a first fitting portion, the cabinet door (8) is provided with a second fitting portion, and the second fitting portion can form a locking connection with the first fitting portion along with the closing of the cabinet doors (8).

2. The dryer according to claim 1, wherein two side plates (211) are provided, and the side wall members (21) have a cross section in an "L" shape; or

three side plates (211) are provided, and the side wall members (21) have a cross section in a "U" shape; or
four side plates (211) are provided, and the side wall members (21) have a cross section in a rectangular shape.

3. The dryer according to claim 2, wherein the side wall member (21) is molded as an integrated structure; or

two adjacent side plates (211) on the side wall member (21) are spliced, and the two adjacent side plates (211) are sealed at a joint therebetween,
preferably, the side plates (211) comprise a first side plate (2111) and a second side plate (2112), wherein the first side plate (2111) and the second side plate (2112) are respectively provided at two sides of the inner chamber (20); and
the first side plate (2111) and the second side plate (2112) are provided with a plurality of convex ribs (24) protruding towards the inner chambers (20), the plurality of convex ribs (24) are provided at intervals in a vertical direction, and the convex ribs (24) on the first side plate (2111) and the second side plate (2112) are corresponding to each other.

4. The dryer according to any one of claims 1-3, wherein the side plates (211) comprise an inner side plate (2113) and an outer side plate (2114), and a hollow interlayer (2115) is provided between the inner side plate (2113) and the outer side plate (2114),
preferably, the inner side plate (2113) and the outer side plate (2114) have different thermal conductivity coefficients.

5. The dryer according to claim 1, wherein the barrier structure (3) is an air layer (31); and the case (1) comprises an outer shell (16), wherein the outer shell (16) is provided with a plurality of vent holes (161), a flow space (162) is formed between the outer shell (16) and the inner tanks (2), and the flow space (162) communicates the air layer (31) with the vent holes (161),

preferably, the vent holes (161) are provided in a strip shape, and the plurality of vent holes (161) are provided side by side on a side surface of the outer shell (16) in a vertical direction,
further preferably, the case (1) comprises an upper cover plate (17), the side wall members (21) have a cross section in a "U" shape, and U-shaped openings of the two side wall members (21) are directed to the upper cover plate (17) and are hermetically connected to the upper cover plate (17); and
the upper cover plate (17) is provided with a first through hole (171) communicating with the air layer (31),
further preferably, a sealing rubber strip (26) is provided between the side wall members (21) and the upper cover plate (17); and
the sealing rubber strip (26) has a width corresponding to a thickness of the side plates (211); or the sealing rubber strip (26) has a width corresponding to a width of the barrier structure (3), the sealing rubber strip (26) is provided with a second through hole (261), and the second through hole (261) is corresponding to the first through hole (171).

6. The dryer according to claim 5, wherein the case (1) comprises a rear cover plate (19), a rear end of the side wall members (21) is hermetically connected to the rear cover plate (19); and

the rear cover plate (19) is provided with a third through hole (191) communicating with the air layer (31).

7. The dryer according to any one of claims 5-6, wherein the case (1) is provided therein with a discharge-promoting fan (163), wherein an air supply end of the discharge-promoting fan (163) is provided towards the air layer (31); and

airflow enters the air layer (31) under an action of the discharge-promoting fan (163), passes through the flow space (162) and then is discharged from the vent holes (161),
preferably, at least one barrier net (27) is provided between the side wall members (21) and the rear cover plate (19); and
the side wall members (21) and the barrier net (27) are hermetically connected at a joint therebetween, and the rear cover plate (19) and the barrier net (27) are hermetically connected at a joint therebetween,
further preferably, the rear cover plate (19) is provided thereon with air guide structures (192) in a horn shape corresponding to the air supply assemblies (4),
further preferably, a mesh density of the barrier net (27) is uniformly arranged; or
a mesh density of the barrier net (27) is decreased from a central area of the inner chambers (20) to an outer edge.

8. The dryer according to any one of claims 1, 6, and 7, wherein the air supply assemblies (4) each comprise an air blower (41) and an electric heating member (42), wherein the air blower (41) is configured to transfer heat dissipated by the electric heating member (42) into the inner chambers (20),

preferably, the inner chambers (20) are each provided with a temperature sensor (28) configured to detect an operating temperature, and the operating temperature of the inner chambers (20) is set to be less than 100 °C,
preferably, a wind shielding plate (43) is provided between two adjacent air supply assemblies (4),
preferably, rotational directions of the air blowers (41) of the two adjacent air supply assemblies (4) are provided to be opposite,
preferably, the air supply assemblies (4) are provided with at least two air blowers (41), preferably, the case (1) is provided with first air control devices (5), wherein the first air control devices (5) are in one-to-one correspondence with the air supply assemblies (4), and the first air control devices (5) each comprise an oscillation frame (51) and a first driver (52) configured to drive the oscillation frame (51) to oscillate; and

the air blowers (41) are provided on the oscillation frames (51),
preferably, the case (1) is provided with second air control devices (6), wherein the second air control devices (6) are in one-to-one correspondence with the inner chambers (20), and the second air control devices (6) each comprise a mounting frame (61), a plurality of air guide plates (62) movably provided on the mounting frame (61), and a second driver (63) configured to drive the air guide plates (62) to oscillate; and

the air guide plates (62) are provided between the air blower (41) and the inner chamber (20).

9. The dryer according to claim 1, wherein the barrier structure (3) is a vacuum space (32).

10. The dryer according to claim 1, wherein the barrier structure (3) is filled therein with a heat insulation filler (33).

11. The dryer according to claim 1, wherein the case (1) is provided with a lifting groove (164) on a side surface.

12. The dryer according to claim 1, wherein the case (1) is provided with a plug receiving groove (182), and the plug receiving groove (182) is provided therein with a socket structure for plugging a plug.

13. The dryer according to claim 1, wherein the case (1) is provided with a dustproof cover (7) on a rear side.

14. The dryer according to claim 1, wherein the inner chambers (20) and the cabinet doors (8) are provided with vent gaps (81) therebetween, and air delivered by the air supply assemblies (4) to the inner chambers (20) is discharged to the outside from the vent gaps (81); and

the vent gaps (81) of the two adjacent inner chambers (20) are provided to be sealed and blocked from each other,
preferably, a ratio of a flow area of the vent gap (81) to a volume of the inner chamber (20) is:

$$1 \text{ mm}^2 : 10400 \text{ mm}^3 - 1 \text{ mm}^2 : 5200 \text{ mm}^3.$$

**15.** The dryer according to claim 1, wherein one end of the bearing portion (102) is connected to the case (1), and the other end is provided to protrude towards a front side surface of the case (1); and

the bearing portion (102) is detachably connected to the case (1); or the bearing portion (102) is integrated with the case (1),
preferably, the first fitting portion is a locking slot (1021) provided on the bearing portion (102), the second fitting portion is a locking pin (83) provided on the cabinet door (8), and the locking pin (83) can be moved to extend into the locking slot (1021); or
the first fitting portion is a locking pin (83) provided on the bearing portion (102), the second fitting portion is a locking slot (1021) provided on the cabinet door (8), and the locking pin (83) can be moved to extend into the locking slot (1021),
further preferably, the locking pin (83) is provided with an elastic element (831), and the elastic element (831) is connected to the locking pin (83), and is configured to provide a pre-tightening force to the locking pin (83),
further preferably, a tail end of the locking pin (83) is provided in a spherical shape, and an inner wall surface of the locking slot (1021) is provided as a cambered surface; and/or
a front end of the bearing portion (102) is provided with an inclined guide surface (1022).

**Patentansprüche**

**1.** Trockner, **dadurch gekennzeichnet, dass** er Folgendes umfasst:

ein Gehäuse (1);
mindestens zwei Innenbehälter (2), wobei die mindestens zwei Innenbehälter (2) jeweils ein Seitenwandglied (21) aufweisen, das durch aufeinanderfolgendes Verbinden von mindestens zwei Seitenplatten (211) zu einem Stück gebildet ist, wobei die mindestens zwei Innenbehälter (2) jeweils mit einer Innenkammer (20) versehen sind; wobei die beiden Innenbehälter (2) nebeneinander oder gestapelt im Gehäuse (1) vorgesehen sind und die Seitenwandglieder (21) der beiden Innenbehälter (2) in Abständen so vorgesehen sind, dass sie eine Barrierestruktur (3) bilden, wobei die Barrierestruktur (3) dafür ausgelegt ist, die Wärme zwischen den Innenkammern (20) der beiden Innenbehälter (2) zu blockieren; und
Luftzufuhranordnungen (4), die im Gehäuse (1) vorgesehen sind und in einer Eins-zu-Eins-Entsprechung zu den Innenkammern (20) stehen, wobei die Luftzufuhranordnungen (4) jeweils ein auf die Innenkammern (20) gerichtetes Luftzufuhrende aufweisen,
wobei das Gehäuse (1) mit Schranktüren (8) versehen ist und die Anzahl der Schranktüren (8) der Anzahl der Innenkammern (20) entspricht; oder
sich die mindestens zwei Innenkammern (20) eine Schranktür (8) teilen,
**dadurch gekennzeichnet, dass** das Gehäuse (1) mit einem Lagerabschnitt (102) versehen ist, die Schranktüren (8) mit einem Anlageabschnitt versehen sind und sich der Anlageabschnitt beim Schließen der Schranktüren (8) zum Lagerabschnitt (102) hin bewegen kann, um die Schranktüren (8) durch den Lagerabschnitt (102) abzustützen; und
der Lagerabschnitt (102) mit einem ersten Passabschnitt versehen ist, die Schranktür (8) mit einem zweiten Passabschnitt versehen ist und der zweite Passabschnitt beim Schließen der Schranktüren (8) eine Verriegelungsverbindung mit dem ersten Passabschnitt bilden kann.

**2.** Trockner nach Anspruch 1, wobei zwei Seitenplatten (211) vorgesehen sind und die Seitenwandglieder (21) einen Querschnitt in einer "L"-Form aufweisen; oder

drei Seitenplatten (211) vorgesehen sind und die Seitenwandglieder (21) einen Querschnitt in einer "U"-Form aufweisen; oder
vier Seitenplatten (211) vorgesehen sind und die Seitenwandglieder (21) einen Querschnitt in einer rechteckigen Form aufweisen.

**3.** Trockner nach Anspruch 2, wobei das Seitenwandglied (21) als einstückige Struktur geformt ist; oder

zwei benachbarte Seitenplatten (211) am Seitenwandglied (21) miteinander verbunden sind und die beiden benachbarten Seitenplatten (211) an einer Verbindungsstelle zwischen ihnen abgedichtet sind,
vorzugsweise die Seitenplatten (211) eine erste Seitenplatte (2111) und eine zweite Seitenplatte (2112) umfassen, wobei die erste Seitenplatte (2111) und die zweite Seitenplatte (2112) jeweils an zwei Seiten der Innenkammer (20) vorgesehen sind; und

die erste Seitenplatte (2111) und die zweite Seitenplatte (2112) mit mehreren konvexen Rippen (24) versehen sind, die in Richtung der Innenkammern (20) vorstehen, wobei die mehreren konvexen Rippen (24) in Abständen in einer vertikalen Richtung vorgesehen sind und die konvexen Rippen (24) an der ersten Seitenplatte (2111) und der zweiten Seitenplatte (2112) einander entsprechen.

4. Trockner nach einem der Ansprüche 1 bis 3, wobei die Seitenplatten (211) eine innere Seitenplatte (2113) und eine äußere Seitenplatte (2114) umfassen und zwischen der inneren Seitenplatte (2113) und der äußeren Seitenplatte (2114) eine hohle Zwischenschicht (2115) vorgesehen ist,

vorzugsweise die innere Seitenplatte (2113) und die äußere Seitenplatte (2114) unterschiedliche Wärmeleitfähigkeitskoeffizienten aufweisen.

5. Trockner nach Anspruch 1, wobei die Barrierestruktur (3) eine Luftschicht (31) ist; und das Gehäuse (1) eine Außenhülle (16) umfasst, wobei die Außenhülle (16) mit mehreren Entlüftungslöchern (161) versehen ist, zwischen der Außenhülle (16) und den Innenbehältern (2) ein Strömungsraum (162) ausgebildet ist und der Strömungsraum (162) die Luftschicht (31) mit den Entlüftungsöffnungen (161) verbindet,

vorzugsweise die Entlüftungslöcher (161) in einer Streifenform angeordnet sind und die mehreren Entlüftungslöcher (161) nebeneinander auf einer Seitenfläche der Außenhülle (16) in einer vertikalen Richtung angeordnet sind,

weiter bevorzugt das Gehäuse (1) eine obere Abdeckplatte (17) umfasst, die Seitenwandglieder (21) einen Querschnitt in einer "U"-Form aufweisen und U-förmige Öffnungen der beiden Seitenwandglieder (21) zur oberen Abdeckplatte (17) hin ausgerichtet sind und hermetisch mit der oberen Abdeckplatte (17) verbunden sind; und

die obere Abdeckplatte (17) mit einem ersten Durchgangsloch (171) versehen ist, das mit der Luftschicht (31) kommuniziert,

weiter bevorzugt ein Dichtungsgummistreifen (26) zwischen den Seitenwandgliedern (21) und der oberen Abdeckplatte (17) vorgesehen ist; und

der Dichtungsgummistreifen (26) eine Breite aufweist, die einer Dicke der Seitenplatten (211) entspricht; oder der Dichtungsgummistreifen (26) eine Breite aufweist, die einer Breite der Barrierestruktur (3) entspricht, wobei der Dichtungsgummistreifen (26) mit einem zweiten Durchgangsloch (261) versehen ist und das zweite Durchgangsloch (261) mit dem ersten Durchgangsloch (171) korrespondiert.

6. Trockner nach Anspruch 5, wobei das Gehäuse (1) eine hintere Abdeckplatte (19) umfasst, wobei ein hinteres Ende der Seitenwandglieder (21) hermetisch mit der hinteren Abdeckplatte (19) verbunden ist; und

die hintere Abdeckplatte (19) mit einem dritten Durchgangsloch (191) versehen ist, das mit der Luftschicht (31) kommuniziert.

7. Trockner nach einem der Ansprüche 5 bis 6, wobei das Gehäuse (1) darin mit einem ausgabefördernden Ventilator (163) versehen ist, wobei ein Luftzufuhrende des ausgabefördernden Ventilators (163) in Richtung der Luftschicht (31) vorgesehen ist; und

der Luftstrom unter einer Einwirkung des ausgabefördernden Ventilators (163) in die Luftschicht (31) eintritt, den Strömungsraum (162) durchströmt und dann aus den Entlüftungslöchern (161) ausgegeben wird,

vorzugsweise mindestens ein Barrierenetz (27) zwischen den Seitenwandgliedern (21) und der hinteren Abdeckplatte (19) vorgesehen ist; und

die Seitenwandglieder (21) und das Barrierenetz (27) an einer Verbindungsstelle zwischen ihnen hermetisch verbunden sind und die hintere Abdeckplatte (19) und das Barrierenetz (27) an einer Verbindungsstelle zwischen ihnen hermetisch verbunden sind,

weiter bevorzugt auf der hinteren Abdeckplatte (19) Luftleitstrukturen (192) in einer den Luftzufuhranordnungen (4) entsprechenden Hornform vorgesehen sind,

weiter bevorzugt eine Maschendichte des Barrierenetzes (27) gleichmäßig angeordnet ist; oder eine Maschendichte des Barrierenetzes (27) von einem zentralen Bereich der Innenkammern (20) zu einem Außenrand hin abnimmt.

8. Trockner nach einem der Ansprüche 1, 6 und 7, wobei die Luftzufuhranordnungen (4) jeweils ein Luftgebläse (41) und ein elektrisches Heizglied (42) umfassen, wobei das Luftgebläse (41) dafür ausgelegt ist, die vom elektrischen Heizglied (42) abgegebene Wärme in die Innenkammern (20) zu übertragen,

vorzugsweise die Innenkammern (20) jeweils mit einem Temperatursensor (28) versehen sind, der dafür ausgelegt ist, eine Betriebstemperatur zu detektieren, und die Betriebstemperatur der Innenkammern (20) so eingestellt ist, dass sie weniger als 100 °C beträgt,

vorzugsweise zwischen zwei benachbarten Luftzufuhranordnungen (4) eine Windschutzplatte (43) vorgesehen ist,

vorzugsweise Drehrichtungen der Luftgebläse (41) der beiden benachbarten Luftzufuhranordnungen (4) so vorgesehen sind, dass sie entgegengesetzt sind,

vorzugsweise die Luftzufuhranordnungen (4) mit mindestens zwei Luftgebläsen (41) versehen sind,

vorzugsweise das Gehäuse (1) mit ersten Luftsteuervorrichtungen (5) versehen sind, wobei die ersten Luftsteuervorrichtungen (5) in einer Eins-zu-Eins-Entsprechung zu den Luftzufuhranordnungen (4) stehen und die ersten Luftsteuervorrichtungen (5) jeweils einen Schwingungsrahmen (51) und einen ersten Antrieb (52) umfassen, der dafür ausgelegt ist, den Schwingungsrahmen (51) in Schwingung zu versetzen; und die Luftgebläse (41) an den Schwingrahmen (51) vorgesehen sind,

vorzugsweise das Gehäuse (1) mit zweiten Luftsteuervorrichtungen (6) versehen ist, wobei die zweiten Luftsteuervorrichtungen (6) in einer Eins-zu-Eins-Entsprechung zu den Innenkammern (20) stehen und die zweiten Luftsteuervorrichtungen (6) jeweils einen Montagerahmen (61), mehrere Luftleitplatten (62), die beweglich an dem Montagerahmen (61) vorgesehen sind, und einen zweiten Antrieb (63), der dafür ausgelegt ist, die Luftleitplatten (62) in Schwingung zu versetzen, umfassen; und die Luftleitplatten (62) zwischen dem Luftgebläse (41) und der Innenkammer (20) vorgesehen sind.

9. Trockner nach Anspruch 1, wobei die Barrierestruktur (3) ein Vakuumraum (32) ist.

10. Trockner nach Anspruch 1, wobei die Barrierestruktur (3) darin mit einem wärmeisolierenden Füllmaterial (33) gefüllt ist.

11. Trockner nach Anspruch 1, wobei das Gehäuse (1) an einer Seitenfläche mit einer Hebenut (164) versehen ist.

12. Trockner nach Anspruch 1, wobei das Gehäuse (1) mit einer Steckeraufnahme-Nut (182) versehen ist und die Steckeraufnahme-Nut (182) darin mit einer Buchsenstruktur zum Einstecken eines Steckers versehen ist.

13. Trockner nach Anspruch 1, wobei das Gehäuse (1) an einer Rückseite mit einer staubdichten Abdeckung (7) versehen ist.

14. Trockner nach Anspruch 1, wobei die Innenkammern (20) und die Schranktüren (8) zwischen ihnen mit Entlüftungsspalten (81) versehen sind und die von den Luftzufuhranordnungen (4) zu den Innenkammern (20) abgegebene Luft aus den Entlüftungsspalten (81) nach außen ausgegeben wird; und

die Entlüftungsspalte (81) der zwei benachbarten Innenkammern (20) so vorgesehen sind, dass sie gegeneinander abgedichtet und blockiert sind,

vorzugsweise ein Verhältnis der Durchflussfläche des Entlüftungsspalts (81) zu einem Volumen der Innenkammer (20) wie folgt ist:

$$1 \text{ mm}^2{:}10400 \text{ mm}^3 - 1 \text{ mm}^2{:}5200 \text{ mm}^3.$$

15. Trockner nach Anspruch 1, wobei ein Ende des Lagerabschnitts (102) mit dem Gehäuse (1) verbunden ist und das andere Ende so vorgesehen ist, dass es in Richtung einer vorderen Seitenfläche des Gehäuses (1) vorsteht; und

der Lagerabschnitt (102) lösbar mit dem Gehäuse (1) verbunden ist; oder der Lagerabschnitt (102) mit dem Gehäuse (1) einstückig ausgebildet ist,

vorzugsweise der erste Passabschnitt ein am Lagerabschnitt (102) vorgesehener Verriegelungsschlitz (1021) ist, der zweite Passabschnitt ein an der Schranktür (8) vorgesehener Verriegelungsstift (83) ist und der Verriegelungsstift (83) so bewegt werden kann, dass er sich in den Verriegelungsschlitz (1021) hinein erstreckt; oder der erste Passabschnitt ein am Lagerabschnitt (102) vorgesehener Verriegelungsstift (83) ist, der zweite Passabschnitt ein an der Schranktür (8) vorgesehener Verriegelungsschlitz (1021) ist und der Verriegelungsstift (83) so bewegt werden kann, dass er sich in den Verriegelungsschlitz (1021) hinein erstreckt,

weiter bevorzugt der Verriegelungsstift (83) mit einem elastischen Element (831) versehen ist und das elastische Element (831) mit dem Verriegelungsstift (83) verbunden ist und dafür ausgebildet ist, eine Vorspannkraft auf den Verriegelungsstift (83) auszuüben,
weiter bevorzugt ein hinteres Ende des Verriegelungsstifts (83) kugelförmig vorgesehen ist und eine Innenwandfläche des Verriegelungsschlitzes (1021) als gewölbte Fläche vorgesehen ist; und/oder
ein vorderes Ende des Lagerabschnitts (102) mit einer geneigten Führungsfläche (1022) versehen ist.

**Revendications**

1.  Sécheur, **caractérisé en ce qu'**il comprend :

    un boîtier (1) ;
    au moins deux réservoirs internes (2), dans lequel les au moins deux réservoirs internes (2) comprennent chacun un organe de paroi latérale (21) formé en reliant séquentiellement au moins deux plaques latérales (211) d'un seul tenant, les au moins deux réservoirs internes (2) sont chacun pourvus d'une chambre interne (20) ; les deux réservoirs internes (2) sont disposés côte à côte ou empilés dans le boîtier (1), et les organes de paroi latérale (21) des deux réservoirs internes (2) sont disposés à des intervalles de manière à former une structure de barrière (3), dans lequel la structure de barrière (3) est configurée pour bloquer la chaleur entre les chambres internes (20) des deux réservoirs internes (2) ; et
    des ensembles d'alimentation en air (4), ménagés dans le boîtier (1) et en correspondance biunivoque avec les chambres internes (20), dans lequel les ensembles d'alimentation en air (4) comportent chacun une extrémité d'alimentation en air dirigée vers les chambres internes (20),
    dans lequel le boîtier (1) est pourvu de portes d'armoire (8), et le nombre des portes d'armoire (8) est en correspondance avec le nombre de chambres internes (20) ; ou
    les au moins deux chambres internes (20) partagent une porte d'armoire (8),
    **caractérisé en ce que** le boîtier (1) est pourvu d'une portion d'appui (102), les portes d'armoire (8) sont pourvues d'une portion de butée, et la portion de butée peut se déplacer vers la portion d'appui (102) lors de la fermeture des portes d'armoire (8), de manière à supporter les portes d'armoire (8) par l'intermédiaire de la portion d'appui (102) ; et
    la portion d'appui (102) est pourvue d'une première portion d'emboîtement, la porte d'armoire (8) est pourvue d'une deuxième portion d'emboîtement, et la deuxième portion d'emboîtement peut former une liaison de verrouillage avec la première portion d'emboîtement lors de la fermeture des portes d'armoire (8).

2.  Sécheur selon la revendication 1, dans lequel deux plaques latérales (211) sont ménagées, et les organes de paroi latérale (21) présentent une section droite en forme de « L » ; ou

    trois plaques latérales (211) sont ménagées, et les organes de paroi latérale (21) ont une section droite en forme de « U » ; ou
    quatre plaques latérales (211) sont ménagées, et les organes de paroi latérale (21) ont une section droite de forme rectangulaire.

3.  Sécheur selon la revendication 2, dans lequel l'organe de paroi latérale (21) est moulé sous forme de structure intégrée ; ou

    deux plaques latérales adjacentes (211) sur l'organe de paroi latérale (21) sont épissées, et les deux plaques latérales adjacentes (211) sont scellées entre elles au niveau d'un joint,
    de préférence, les plaques latérales (211) comprennent une première plaque latérale (2111) et une deuxième plaque latérale (2112), dans lequel la première plaque latérale (2111) et la deuxième plaque latérale (2112) sont respectivement ménagées sur deux côtés de la chambre interne (20) ; et
    la première plaque latérale (2111) et la deuxième plaque latérale (2112) sont pourvues d'une pluralité de nervures convexes (24) faisant saillie vers les chambres internes (20), les nervures convexes de la pluralité (24) sont disposées à des intervalles dans une direction verticale, et les nervures convexes (24) sur la première plaque latérale (2111) et la deuxième plaque latérale (2112) correspondent les unes aux autres.

4.  Sécheur selon l'une quelconque des revendications 1 à 3, dans lequel les plaques latérales (211) comprennent une plaque latérale interne (2113) et une plaque latérale externe (2114), et une couche intermédiaire creuse (2115) est ménagée entre la plaque latérale interne (2113) et la plaque latérale externe (2114),
    de préférence, la plaque latérale interne (2113) et la plaque latérale externe (2114) ont des coefficients de conductivité thermique différents.

**5.** Sécheur selon la revendication 1, dans lequel la structure de barrière (3) est une couche d'air (31) ; et

le boîtier (1) comprend une enveloppe externe (16), dans lequel l'enveloppe externe (16) est pourvue d'une pluralité d'évents (161), un espace d'écoulement (162) est formé entre l'enveloppe externe (16) et les réservoirs internes (2), et l'espace d'écoulement (162) fait communiquer la couche d'air (31) avec les évents (161), de préférence, les évents (161) sont ménagés en forme de bande, et les évents (161) de la pluralité sont disposés côte à côte sur une surface latérale de l'enveloppe externe (16) dans une direction verticale, en outre de préférence, le boîtier (1) comprend une plaque-couvercle supérieure (17), les organes de paroi latérale (21) ont une section droite en forme de « U », et les ouvertures en forme de U des deux organes de paroi latérale (21) sont dirigées vers la plaque-couvercle supérieure (17) et sont hermétiquement reliées à la plaque-couvercle supérieure (17) ; et la plaque-couvercle supérieure (17) est pourvue d'un premier trou traversant (171) communiquant avec la couche d'air (31), en outre de préférence, une bande d'étanchéité en caoutchouc (26) est ménagée entre les organes de paroi latérale (21) et la plaque-couvercle supérieure (17) ; et la bande d'étanchéité en caoutchouc (26) a une largeur correspondant à une épaisseur des plaques latérales (211) ; ou la bande d'étanchéité en caoutchouc (26) a une largeur correspondant à une largeur de la structure de barrière (3), la bande d'étanchéité en caoutchouc (26) est pourvue d'un deuxième trou traversant (261), et le deuxième trou traversant (261) correspond au premier trou traversant (171).

**6.** Sécheur selon la revendication 5, dans lequel le boîtier (1) comprend une plaque-couvercle arrière (19), une extrémité arrière des organes de paroi latérale (21) est hermétiquement reliée à la plaque-couvercle arrière (19) ; et la plaque-couvercle arrière (19) est pourvue d'un troisième trou traversant (191) communiquant avec la couche d'air (31).

**7.** Sécheur selon l'une quelconque des revendications 5 et 6, dans lequel le boîtier (1) est pourvu en son sein d'un ventilateur favorisant l'évacuation (163), dans lequel une extrémité d'alimentation en air du ventilateur favorisant l'évacuation (163) est ménagée vers la couche d'air (31) ; et

un flux d'air pénètre dans la couche d'air (31) sous une action du ventilateur favorisant l'évacuation (163), traverse l'espace d'écoulement (162), puis est évacué par les évents (161), de préférence, au moins un filet barrière (27) est ménagé entre les organes de paroi latérale (21) et la plaque-couvercle arrière (19) ; et les organes de paroi latérale (21) et le filet barrière (27) sont hermétiquement reliés entre eux en un joint, et la plaque-couvercle arrière (19) et le filet barrière (27) sont hermétiquement reliés entre eux en un joint, en outre de préférence, le dessus de la plaque-couvercle arrière (19) est pourvu de structures de guidage d'air (192) en forme de cornet correspondant aux ensembles d'alimentation en air (4), en outre de préférence, une densité de maille du filet barrière (27) est agencée uniformément ; ou une densité de maille du filet barrière (27) diminue depuis une zone centrale des chambres internes (20) vers un bord externe.

**8.** Sécheur selon l'une quelconque des revendications 1, 6 et 7, dans lequel les ensembles d'alimentation en air (4) comprennent chacun une soufflerie à air (41) et un organe de chauffage électrique (42), dans lequel la soufflerie à air (41) est configurée pour transférer la chaleur dissipée par l'organe de chauffage électrique (42) dans les chambres internes (20),

de préférence, les chambres internes (20) sont chacune pourvues d'un capteur de température (28) configuré pour détecter une température de fonctionnement, et la température de fonctionnement des chambres internes (20) est fixée à moins de 100 °C, de préférence, une plaque pare-vent (43) est ménagée entre deux ensembles d'alimentation en air (4) adjacents, de préférence, des sens de rotation des souffleries à air (41) des deux ensembles d'alimentation en air (4) adjacents sont ménagés pour être opposés, de préférence, les ensembles d'alimentation en air (4) sont pourvus d'au moins deux souffleries à air (41),

de préférence, le boîtier (1) est pourvu de premiers dispositifs de commande d'air (5), dans lequel les premiers dispositifs de commande d'air (5) sont en correspondance biunivoque avec les ensembles d'alimentation en air (4), et les premiers dispositifs de commande d'air (5) comprennent chacun un cadre oscillant (51) et un premier organe d'entraînement (52) configuré pour entraîner le cadre oscillant (51) en oscillation ; et

les souffleries à air (41) sont ménagées sur les cadres oscillants (51),

de préférence, le boîtier (1) est pourvu de deuxièmes dispositifs de commande d'air (6), dans lequel les deuxièmes dispositifs de commande d'air (6) sont en correspondance biunivoque avec les chambres internes (20), et les deuxièmes dispositifs de commande d'air (6) comprennent chacun un cadre de montage (61), une pluralité de plaques de guidage d'air (62) ménagées de manière mobile sur le cadre de montage (61), et un deuxième organe d'entraînement (63) configuré pour entraîner les plaques de guidage d'air (62) en oscillation ; et

les plaques de guidage d'air (62) sont ménagées entre la soufflerie à air (41) et la chambre interne (20).

9. Sécheur selon la revendication 1, dans lequel la structure de barrière (3) est un espace sous vide (32).

10. Sécheur selon la revendication 1, dans lequel la structure de barrière (3) est chargée d'une charge isolante thermique (33) en son sein.

11. Sécheur selon la revendication 1, dans lequel le boîtier (1) est pourvu d'une rainure de levage (164) sur une surface latérale.

12. Sécheur selon la revendication 1, dans lequel le boîtier (1) est pourvu d'une rainure de réception de fiche (182), et la rainure de réception de fiche (182) est pourvue en son sein d'une structure de prise destinée à brancher une fiche.

13. Sécheur selon la revendication 1, dans lequel le boîtier (1) est pourvu d'un couvercle anti-poussière (7) sur un côté arrière.

14. Sécheur selon la revendication 1, dans lequel les chambres internes (20) et les portes d'armoire (8) sont pourvues d'interstices d'aération (81) entre elles, et l'air délivré par les ensembles d'alimentation en air (4) vers les chambres internes (20) est évacué vers l'extérieur par les interstices d'aération (81) ; et

les interstices d'aération (81) des deux chambres internes (20) adjacentes sont ménagés pour être scellés et bloqués l'un par rapport à l'autre,

de préférence, un rapport entre une aire d'écoulement de l'interstice d'aération (81) et un volume de la chambre interne (20) est de :

$$1 \text{ mm}^2{:}10400 \text{ mm}^3 \text{ à } 1 \text{ mm}^2{:}5200 \text{ mm}^3.$$

15. Sécheur selon la revendication 1, dans lequel une extrémité de la portion d'appui (102) est reliée au boîtier (1), et l'autre extrémité est ménagée pour faire saillie vers une surface latérale avant du boîtier (1) ; et

la portion d'appui (102) est reliée de manière détachable au boîtier (1) ; ou la portion d'appui (102) est intégrée au boîtier (1),

de préférence, la première portion d'emboîtement est une fente de verrouillage (1021) ménagée sur la portion d'appui (102), la deuxième portion d'emboîtement est un pion de verrouillage (83) ménagé sur la porte d'armoire (8), et le pion de verrouillage (83) peut être déplacé pour s'étendre dans la fente de verrouillage (1021) ; ou la première portion d'emboîtement est un pion de verrouillage (83) ménagé sur la portion d'appui (102), la deuxième portion d'emboîtement est une fente de verrouillage (1021) ménagée sur la porte d'armoire (8), et le pion de verrouillage (83) peut être déplacé pour s'étendre dans la fente de verrouillage (1021),

en outre de préférence, le pion de verrouillage (83) est pourvu d'un élément élastique (831), et l'élément élastique (831) est relié au pion de verrouillage (83) et est configuré pour fournir une force de pré-serrage au pion de verrouillage (83),

en outre de préférence, une extrémité arrière du pion de verrouillage (83) est ménagée sous forme sphérique, et une surface de paroi interne de la fente de verrouillage (1021) est ménagée sous forme de surface bombée ; et/ou une extrémité avant de la portion d'appui (102) est pourvue d'une surface de guidage inclinée (1022).

**FIG. 1**

**FIG. 2**

**FIG. 3**

**FIG. 4**

**FIG. 5**

**FIG. 6**

**FIG. 7**

**FIG. 8**

**FIG. 9**

**FIG. 10**

**FIG. 11**

**FIG. 12**

**FIG. 13**

**FIG. 14**

**FIG. 15**

**FIG. 16**

**FIG. 17**

**FIG. 18**

**FIG. 19**

**FIG. 20**

**FIG. 21**

**FIG. 22**

**FIG. 23**

**FIG. 24**

**FIG. 25**

**FIG. 26**

**FIG. 27**

**FIG. 28**

**FIG. 29**

**FIG. 30**

**FIG. 31**

**FIG. 32**

**FIG. 33**

**FIG. 34**

**FIG. 35**

**FIG. 36**

**FIG. 37**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202421520268
- CN 202411127260
- CN 202421998345
- CN 202421998186X
- CA 1163790 A